# EUROPÄISCHE PATENTSCHRIFT

(11) **EP 4 308 037 B1**
(45) Veröffentlichungstag und Bekanntmachung des Hinweises auf die Patenterteilung: **11.12.2024**
(21) Anmeldenummer: 22710991.5
(22) Anmeldetag: 01.03.2022
(51) Int. Cl.: A61C 13/00, A61C 13/087, A61C 13/09, B29C 35/02, B29C 39/02, B29C 39/38, B29K 33/00

(54) **VERFAHREN ZUR HERSTELLUNG STRUKTURIERTER SCHICHTEN FÜR MATERIALIEN ZUR ZAHNPROTHESENHERSTELLUNG UND VORRICHTUNG HIERFÜR**
METHOD FOR PRODUCING STRUCTURED LAYERS FOR MATERIALS FOR PRODUCING DENTAL PROSTHESES, AND DEVICE FOR THIS PURPOSE
PROCÉDÉ DE FABRICATION DE COUCHES STRUCTURÉES POUR MATÉRIAUX DE FABRICATION DE PROTHÈSES DENTAIRES, ET DISPOSITIF À CET EFFET

(30) Priorität: 19.03.2021 DE 102021106798
(43) Veröffentlichungstag der Anmeldung: 24.01.2024
(73) Patentinhaber: Kulzer GmbH, 63450 Hanau (DE)
(72) Erfinder: STANGE, Frank-Uwe, 88085 Langenargen (DE); MÖLLER, Matthias, 88097 Eriskirch (DE); PAYER, Stefan, 89584 Ehingen (DE); JOHNSON, Chai, Shanghai 201100 (CN)
(74) Vertreter: Schultheiss & Sterzel Patentanwälte PartG mbB
(86) Internationale Anmeldenummer: PCT/EP2022/055138
(87) Internationale Veröffentlichungsnummer: WO 2022/194540

(56) Entgegenhaltungen:
- WO-A1-2013/072287
- US-A1- 2016 220 337

## Beschreibung

Die Erfindung betrifft ein Verfahren zur Herstellung strukturierte Schichten in Materialien zur Zahnprothesenherstellung. Die Erfindung betrifft ferner eine Vorrichtung zum Umsetzen eines solchen Verfahrens.

Das Verfahren ist zur dauerhaften Strukturierung von pastösen Oberflächen von reaktiven Mischungen, insbesondere Acrylaten und Methacrylaten, und daraus hergestellte strukturierte Oberflächen zwischen den Schichten geeignet. Dadurch können natürlich wirkende Farbübergänge in einem Kunststoffkörper erzeugt werden, der zur Herstellung von Zahnprothesen verwendet wird, so dass die Zahnprothesen eine möglichst natürlich wirkende Erscheinung aufweisen.

Unter einer Zahnprothese sind Prothesenzähne für künstliche Gebisse (Voll- oder Teil-Prothesen) sowie Kronen und Brücken zu verstehen, die einen natürlichen Zahn nachbilden beziehungsweise ersetzen sollen.

Zur Herstellung von natürlich wirkenden Zahnprothesen aus Kunststoff oder aus Keramik mittels subtraktiver Fertigungsverfahren werden mehrschichtige Materialscheiben benötigt. Die Übergänge der einzelnen Schichten untereinander sollen nicht scharf abgegrenzt sein, sondern in den Grenzflächen eine diffuse Struktur aufweisen, damit diese dem natürlichen Erscheinungsbild natürlicher Zähne besser entsprechen.

Die US 4970032 A und die US 5989031 A offenbaren mehrfarbige Rohlinge (Blanks) zur Herstellung von Zahnprothesen, wie Kronen. Dabei werden die Schichten übereinander liegend angeordnet, um der Zahnprothese ein natürliches Aussehen zu geben und sich hinsichtlich der Stabilität und der Abnutzung des Materials an einen natürlichen Zahn anzunähern. Als Herstellungsverfahren wird beispielsweise Spritzgießen genannt. Dabei können aber unerwünschte und unnatürlich aussehende scharfe Grenzflächen entstehen. Die US 2016/0220337 A1 offenbart einen Rohling zur Herstellung von Zahnprothesen, bei dem in einem Bett eines ersten Materials ein Kernbereich mit einer anderen Färbung vorgesehen ist.

Aus der WO 2020/025795 A1 und der US 2020/0317561 A1 sind Verfahren zur Herstellung eines keramischen Rohlings mit Farbübergängen bekannt, aus denen Zahnprothesen gefertigt werden können. Die Fertigung von solchen Keramiken und Glaskeramiken ist sehr aufwendig, ebenso wie deren Bearbeitung. Daher wird häufig die Herstellung aus Kunststoff bevorzugt.

Die DE 10 2017 116 630 A1 offenbart ein Verfahren zur Herstellung eines mehrschichtigen gesinterten keramischen Weißlings mit Farbübergängen zum Erzeugen natürlich wirkender Farbübergänge. Bei dem Verfahren müssen vor der Verbindung der Grünlinge der miteinander zu verbindenden Keramikscheiben separate Teilverdichtungen der Grünscheiben erfolgen. Aus der DE 10 2011 055 393 B4 ist ein mehrschichtiger Kunststoffrohling zur Herstellung von Zahnprothesen bekannt, bei dem auf einer profilierten Oberfläche eine flüssige Kunststoffschicht aufgebracht wird. Die Schichten werden dort aufwendig mit einem Mehrkomponentenspritzgussverfahren erzeugt. Dabei werden die Kunststoffschichten direkt in flüssiger Form aufgetragen. Das Verfahren hat den Nachteil, dass die Strukturierung der Oberfläche beim Auftragen der Kunststoffschicht verloren geht oder zumindest teilweise verlorengeht, weil die flüssige Kunststoffschicht die Strukturen anlöst oder auflöst. Die DE 10 2017 122 993 B4 offenbart ein Verfahren zur Herstellung eines monochromen polymerisierbaren dentalen Kompositmaterials, bei dem Teile einer mehrteiligen Gussform zum heißisostatischen Pressen beheizbar sind. Mit dem Verfahren soll eine Rissbildung in den monochromen Fräsblöcken verhindert werden. Farbübergänge oder das Zusammensetzen von Fräsblöcken wird nicht thematisiert und wäre auch für die Zielsetzung der DE 10 2017 122 993 B4, nämlich die Herstellung möglichst homogene Fräsblöcke, hinderlich.

Aus der WO 2013/072287 A1 ist ein Rohling für künstliche Zähne mit mehreren unterschiedlichen Farbschichten bekannt, bei dem zwei Kunststoffschichten in Kavitäten einer Spritzgussform eingefüllt werden. Durch das Einspritzen der zweiten Kunststoffschicht auf die noch nicht erstarrte erste Kunststoffschicht in die gleiche Spritzgussform sollen sich die beiden Kunststoffschichten so miteinander verbinden, dass ein homogener Farbübergang begünstigt wird. Nachteilig ist hieran, dass die Mischung dennoch entlang einer ebenen Grenzfläche erfolgt, wodurch die aus einem solchen Rohling gefertigten Zahnprothesen eine gerade Linienstruktur aufweisen werden, die einem natürlichen Aussehen der Prothesenzähne abträglich ist. Zudem ist die Mischbarkeit der Kunststoffe meist schlecht oder kaum noch möglich, wenn hochvernetzte oder klebfähige PMMA-basierte Massen verwendet werden, so dass dann die unerwünschten da unnatürlich erscheinenden Trennlinien auftreten. Auch ist das beschriebene Verfahren aufgrund seiner technischen Umsetzung ausschließlich auf thermoplastische Verfahren beschränkt. Dies führt zu deutlich eingeschränkten Materialeigenschaften hinsichtlich Funktion und Beständigkeit gegenüber polymerisierbaren, vernetzenden Reaktivsystemen.

Die EP 3 669 818 A1 offenbart einen dentalen Mehrfarben-Fräsrohling, der auf Kunststoff basieren kann. Der Mehrfarben-Fräsrohling weist mehrere Schichten mit Rundflächen in einer als Übergangsgeometrie bezeichneten Grenzfläche zwischen den Schichten. Die Schichten können durch Aufeinanderlegen, Kleben oder Aufschmelzen aneinandergefügt werden. Nachteilig ist hieran, dass das Fügen der Schichten aufwendig ist und bei Kunststoffen die Gefahr besteht, dass sich die Strukturen beim Aufgießen der zweiten Schicht entformen. Zudem soll die Grenzfläche möglichst keine Sollbruchstelle bilden können, so dass eine beim Fügen von Kunststoffen nicht vollständige vorherige Vernetzung besser wäre, was allerdings die Formstabilität negativ beeinflusst.

Beim Aufeinanderschichten unpolymerisierter scheibenförmiger Körper ergibt sich in Abhängigkeit von der Einfärbung der Einzelschichten eine mehr oder weniger stark ausgeprägte scharfe Phasengrenze. Diese wirkt sich in der später aus dem polymerisierten Kunststoffkörper (Blank) gefertigten zahntechnischen Arbeit in Form eines Streifenmusters aus. Eine klar definierte Geometrie ist gemäß dem Stand der Technik auch dadurch zu erreichen, dass eine erste Schicht ausgehärtet wird, bevor die zweite Schicht als weiche Paste aufgebracht wird. Damit ist die Phasengrenze in ihrer Form klar definiert.

Für die Herstellung von mehrschichtigen Formkörpern bestehen prinzipiell die folgenden Möglichkeiten:
1. Übereinanderschichten von pastösen Materialscheiben und nachfolgende Polymerisation, wobei dies zu scharf abgegrenzten Phasengrenzen von unnatürlichem Aussehen führt;
2. Herstellung direkt aus der noch flüssigen Phase durch Übereinanderschichten von noch gießfähigen Mischungen (dies geht nur bei Methylmethacrylat-Systemen), wobei dies zu diffusen Übergängen und damit zu einem optisch befriedigendem Ergebnis führt, wobei es hierbei jedoch problematisch ist, dass die flüssigen Mischungen nicht lagerfähig sind und dadurch eine Just-In time Fertigung aller Stufen notwendig ist und auch die Verarbeitungszeit begrenzt ist, was das Verfahren im großen Maßstab schwer umsetzbar macht;
3. Fertigung von polymerisierten Einzelschichten auf einer strukturierten Oberfläche und nachfolgendes Kombinieren mit noch unpolymerisierter Paste analog der EP 3 669 818 A1, wobei dabei eine Struktur entsteht, bei der Nachteile bestehen, dass die Phasengrenze exakt dem geometrischen Muster der abgepressten Struktur entspricht, dass nur leicht strukturierte und verrundete Flächen abpressbar sind, da es sonst zu einer retentiven Anhaftung des polymerisierten Materials kommt, dass die Übergänge scharf ausgeprägt sind und die Sichtbarkeit von der Qualität der Einfärbung abhängig ist und dass das Verfahren mehrstufig und damit aufwändiger ist; und
4. Herstellung aus vielen Schichten mit nur sehr geringem Kontrast zueinander, wobei dieses Verfahren zu guten Ergebnissen führt, jedoch der Aufwand aufgrund der voran zu fertigenden Vielzahl an Schichten sehr hoch ist und die Schichten sehr dünn gefertigt werden müssen.

Die Aufgabe der Erfindung besteht darin, die Nachteile des Stands der Technik zu überwinden. Insbesondere soll eine Möglichkeit gefunden werden, ein Verfahren und eine Vorrichtung bereitzustellen, mit dem beziehungsweise mit der auf kostengünstige und unkomplizierte Weise ein Kunststoffkörper erzeugt werden kann, der ein natürliches Erscheinungsbild bezüglich natürlicher Farbübergänge von Zähnen hat, wobei dementsprechend natürlich wirkende Zahnprothesen aus dem Kunststoffkörper herausfräsbar beziehungsweise herauszuarbeiten sind.

Die Aufgaben der Erfindung werden gelöst durch ein Verfahren nach Anspruch 1 und eine Vorrichtung nach Anspruch 15. Bevorzugt Varianten werden mit den Unteransprüchen 2 bis 14 und 16 und 17 beansprucht.

Die Aufgaben der Erfindung werden also gelöst durch ein Verfahren zur Herstellung eines Kunststoffkörpers mit strukturierten Schichten zur Herstellung von Zahnprothesen, wobei das Verfahren durch die folgenden Schritte gekennzeichnet ist:
A) Bereitstellen einer ersten PMMA-basierten Masse und einer zweiten PMMA-basierten Masse, wobei die erste PMMA-basierte Masse nicht ausgehärtet ist und eine erste Färbung aufweist und wobei die zweite PMMA-basierte Masse nicht ausgehärtet ist und eine zweite Färbung aufweist, wobei die zweite Färbung der zweiten PMMA-basierten Masse von der ersten Färbung der ersten PMMA-basierten Masse abweicht;
B) Aufheizen einer ersten strukturierten Pressfläche auf eine Temperatur zwischen 90°C und 150°C;
C) Pressen der ersten PMMA-basierten Masse mit der aufgeheizten ersten strukturierten Pressfläche, wobei dadurch eine strukturierte Oberfläche der ersten PMMA-basierten Masse entsteht;
D) nachfolgendes Lösen der ersten Pressfläche von der strukturierten ersten PMMA-basierten Masse, wobei die strukturierte Oberfläche der ersten PMMA-basierten Masse erhalten bleibt; und
E) Aufheizen der ersten strukturierten Pressfläche auf eine Temperatur zwischen 90°C und 150°C oder Aufheizen einer zweiten strukturierten Pressfläche auf eine Temperatur zwischen 90°C und 150°C;
F) Pressen der zweiten PMMA-basierten Masse mit der ersten aufgeheizten strukturierten Pressfläche oder der zweiten aufgeheizten strukturierten Pressfläche, wobei dadurch eine strukturierte Oberfläche der zweiten PMMA-basierten Masse entsteht;
G) nachfolgendes Lösen der ersten Pressfläche oder der zweiten Pressfläche von der strukturierten zweiten PMMA-basierten Masse, wobei die strukturierte Oberfläche der zweiten PMMA-basierten Masse erhalten bleibt;
H) nachfolgendes Aufeinanderlegen der strukturierten zweiten PMMA-basierten Masse auf die strukturierte erste PMMA-basierten Masse, so dass die strukturierte Oberfläche der zweiten PMMA-basierten Masse in Richtung der strukturierten Oberfläche der ersten PMMA-basierten Masse ausgerichtet ist; und
I) nachfolgendes Verpressen der ersten strukturierten PMMA-basierten Masse mit der zweiten strukturierten PMMA-basierten Masse, so dass eine feste Verbindung zwischen der ersten PMMA-basierten Masse und der zweiten PMMA-basierten Masse erfolgt.

Unter einer PMMA-basierten Masse ist ein nicht vollständig vernetzter und fluider sowie formbarer Kunststoff aus Polymethylmethacrylat (PMMA) zu verstehen. Die PMMA basierte Masse besteht aus 50 bis 90 Gew.-% pulverförmigen Polymeren, wie PMMA, vorzugsweise 60 bis 70 Gew.-% PMMA, insbesondere PMMA-Perlpolymerisaten, und 10 bis 50 Gew.-% Monomeren, vorzugsweise 30 bis 40 Gew.-% Monomeren, wobei die Monomere insbesondere umfassen (Meth)acrylate, Derivate von (Meth)acrylaten und/oder Vernetzern, wie di- und mehrfach funktionelle (Meth)acrylate.

Die PMMA-basierte Masse soll vorzugsweise mit einem Druck von 10 kN/m² oder mehr plastisch verformbar sein.

Unter einer strukturierten Oberfläche ist im Sinne der vorliegenden Erfindung eine Oberfläche mit einer makroskopischen Struktur zu verstehen. Bevorzugt können hierbei Strukturen zwischen 1 mm und 3 mm vorgesehen sein.

Damit der Kunststoffkörper zur Herstellung von Zahnprothesen geeignet ist, muss er aus einem biokompatiblen Material bestehen. Des Weiteren sollte der Kunststoffkörper nach Aushärtung eine für die Anwendung im Kaubereich eines Kiefers ausreichende Härte aufweisen. Hierzu kann vorgesehen sein, dass der vollständig ausgehärtete Kunststoffkörper eine Vickers-Härte von mindestens 100 HV10 nach DIN EN ISO 6507-1:2018 bis -4:2018 aufweist.

Bevorzugt handelt es sich bei den im Rahmen der vorliegenden Erfindung verwendeten PMMA-basierten Massen um hochvernetzende PMMA-basierte Massen. Dadurch kann eine hohe Festigkeit des Kunststoffkörpers und damit der aus dem Kunststoffkörper gefertigten Zahnprothesen erreicht werden. Die Zahnprothesen sind dadurch auch für den Ersatz von Kauflächen gut geeignet.

Die Schrittfolge B) bis D) und die Schrittfolge E) bis G) können auch gleichzeitig beziehungsweise parallel durchgeführt werden.

Es kann vorgesehen sein, dass ein Schritt J) Aushärten der strukturierten ersten PMMA-basierten Masse und der damit verpressten zweiten PMMA-basierten Masse, wobei vorzugsweise Schritt J) nach Schritt I) erfolgt.

Hierdurch ist der Kunststoffkörper für die Weiterverarbeitung von Zahnprothesen bereit.

Des Weiteren kann vorgesehen sein, dass ein Pressen einer nicht ausgehärteten dritten PMMA-basierten Masse mit zwei einander gegenüberliegend angeordneten aufgeheizten strukturierten Pressflächen erfolgt, wobei dadurch auf beiden Seiten der dritten PMMA-basierten Masse eine strukturierte Oberfläche entsteht, wobei die dritte PMMA-basierte Masse eine dritte Färbung aufweist, die von der ersten Färbung der ersten PMMA-basierten Masse und von der zweiten Färbung der zweiten PMMA-basierten Masse abweicht, nachfolgendes Lösen der Pressflächen von der beidseitig strukturierten dritten PMMA-basierten Masse, wobei die beiden strukturierten Oberflächen der dritten PMMA-basierten Masse erhalten bleiben, wobei in Schritt H) die strukturierte dritte PMMA-basierte Masse zwischen der strukturierten zweiten PMMA-basierten Masse und der strukturierten ersten PMMA-basierten Masse angeordnet ist, so dass die strukturierten Oberflächen aneinander anliegen, und wobei in Schritt I) das nachfolgende Verpressen der ersten strukturierten PMMA-basierten Masse mit der zweiten strukturierten PMMA-basierten Masse und mit der dazwischen angeordneten dritten strukturierten PMMA-basierten Masse erfolgt, so dass eine feste Verbindung zwischen der ersten PMMA-basierten Masse, der zweiten PMMA-basierten Masse und der dritten PMMA-basierten Masse erfolgt.

Hierdurch wird ein mehrstufiger natürlich erscheinender Übergang in dem Kunststoffkörper erzeugt, der auf einfache Weise mit dem Verfahren herstellbar ist.

Alternativ kann vorgesehen sein, dass in Schritt H) insgesamt mehrere weitere PMMA-basierte Massen zwischen der ersten strukturierten PMMA-basierten Masse und der strukturierten zweiten PMMA-basierten Masse angeordnet werden, wobei bevorzugt die Färbungen benachbarter PMMA-basierter Massen der ersten, der zweiten und der mehreren PMMA-basierten Massen voneinander abweichen, wobei vor Schritt H) jede der mehreren weiteren PMMA-basierten Massen mit zwei einander gegenüberliegend angeordneten aufgeheizten strukturierten Pressflächen strukturiert werden, wobei dadurch auf beiden Seiten der mehreren weiteren PMMA-basierten Massen eine strukturierte Oberfläche entsteht, und danach ein Lösen der Pressflächen von den beidseitig strukturierten mehreren weiteren PMMA-basierten Massen erfolgt, wobei die beiden strukturierten Oberflächen der mehreren weiteren PMMA-basierten Massen erhalten bleiben, in Schritt I) das nachfolgende Verpressen der ersten strukturierten PMMA-basierten Masse mit der zweiten strukturierten PMMA-basierten Masse und mit den dazwischen angeordneten mehreren weiteren strukturierten PMMA-basierten Masse erfolgt, so dass eine feste Verbindung zwischen der ersten PMMA-basierten Masse, der zweiten PMMA-basierten Masse und den dazwischen angeordneten mehreren weiteren strukturierten PMMA-basierten Masse erfolgt.

Für jede der strukturierten Oberflächen aller PMMA-basierter Massen kann eine eigene Pressfläche verwendet werden oder es können eine begrenzte Anzahl von Pressflächen wiederholt, durchlaufend oder permutierend verwendet werden. Bevorzugt werden für benachbarte PMMA-basierte Massen beziehungsweise daraus erzeugte Schichten, immer unterschiedliche Pressflächen verwendet. Dafür reicht es aus, wenn immer abwechselnd die erste Pressfläche und die zweite Pressfläche verwendet werden.

Hierdurch wird ein vielstufiger natürlich erscheinender Übergang in dem Kunststoffkörper erzeugt, der auf einfache Weise mit dem Verfahren herstellbar ist.

Bevorzugt kann vorgesehen sein, dass die mehreren weiteren PMMA-basierten Massen, zwischen zwei und zwanzig weitere PMMA-basierte Massen sind, besonders bevorzugt zwischen zwei und zehn weitere PMMA-basierte Massen.

Auch kann vorgesehen sein, dass das Pressen der ersten PMMA-basierten Masse in Schritt C) mit der aufgeheizten ersten strukturierten Pressfläche und das Pressen der zweiten PMMA-basierten Masse in Schritt F) mit der ersten strukturierten Pressfläche oder mit der aufgeheizten strukturierten zweiten Pressfläche mit einem Druck zwischen 10 kN/m² und 500 kN/m² erfolgt, bevorzugt mit einem Druck zwischen 10 kN/m² und 100 kN/m² erfolgt, besonders bevorzugt mit einem Druck zwischen 10 kN/m² und 50 kN/m² erfolgt.

Hierdurch kann sichergestellt werden, dass die fluide erste PMMA-basierte Masse und die fluide zweite PMMA-basierte Masse bei einer für die Verarbeitung geeigneten Konsistenz formbar und deren Oberflächen in gewünschter Weise strukturierbar sind, so dass auf einfache Weise die gewünschten Übergänge entstehen.

Ferner kann vorgesehen sein, dass das Pressen der dritten PMMA-basierten Masse oder der weiteren PMMA-basierten Massen mit den zwei einander gegenüberliegend angeordneten aufgeheizten strukturierten Pressflächen mit einem Druck zwischen 10 kN/m² und 500 kN/m² erfolgt, bevorzugt mit einem Druck zwischen 10 kN/m² und 100 kN/m² erfolgt, besonders bevorzugt mit einem Druck zwischen 10 kN/m² und 50 kN/m² erfolgt.

Hierdurch kann sichergestellt werden, dass jede der angewendeten fluiden PMMA-basierten Massen bei einer für die Verarbeitung geeigneten Konsistenz formbar und deren Oberflächen in gewünschter Weise strukturierbar sind, so dass auf einfache Weise die gewünschten Übergänge entstehen.

Gemäß einer bevorzugten Weiterbildung kann vorgesehen sein, dass das Pressen der ersten PMMA-basierten Masse in Schritt C) mit der aufgeheizten ersten strukturierten Pressfläche und das Pressen der zweiten PMMA-basierten Masse in Schritt G) mit der aufgeheizten ersten strukturierten Pressfläche oder mit der aufgeheizten zweiten strukturierten Pressfläche für einen Zeitraum zwischen 1 s und 50 s lang erfolgt, bevorzugt für einen Zeitraum zwischen 5 s und 30 s lang erfolgt, wobei vorzugsweise und sofern vorhanden das Pressen der dritten PMMA-basierten Masse oder der mehreren weiteren PMMA-basierten Massen mit den zwei einander gegenüberliegend angeordneten aufgeheizten strukturierten Pressflächen für einen Zeitraum zwischen 1 s und 50 s erfolgt, bevorzugt für einen Zeitraum zwischen 5 s und 30 s erfolgt.

Hierdurch kann sichergestellt werden, dass die Oberflächenstrukturierung der jeweils mit der (den) jeweiligen Pressfläche(n) geformten PMMA-basierten Massen auch nach der Verbindung der PMMA-basierten Massen miteinander erhalten bleibt und so ein natürlich wirkender Übergang zwischen den Schichten aus den PMMA-basierten Masse entsteht.

Es kann auch vorgesehen sein, dass die erste strukturierte Pressfläche und/oder die zweite strukturierte Pressfläche während des Pressens beheizt wird oder werden, vorzugsweise alle verwendeten strukturierten Pressflächen während des Pressens beheizt werden.

Vorzugsweise und sofern angewendet werden also auch die zwei einander gegenüberliegenden strukturierten Pressflächen während des Pressens beheizt.

Hiermit kann ein Abkühlen der strukturierten Pressfläche(n) während des Formens der Oberfläche der jeweilig bearbeiteten PMMA-basierten Masse verhindert werden.

Des Weiteren kann vorgesehen sein, dass die erste strukturierte Pressfläche und/oder die zweite strukturierte Pressfläche, vorzugsweise alle verwendeten strukturierten Pressflächen, Strukturen mit einer Profilhöhe zwischen 1 mm und 5 mm aufweisen, bevorzugt mit einer Profilhöhe zwischen 2 mm und 3 mm aufweisen.

Vorzugsweise und sofern angewendet weisen also auch die zwei einander gegenüberliegenden strukturierten Pressflächen Strukturen mit einer Profilhöhe zwischen 1 mm und 5 mm auf, bevorzugt mit einer Profilhöhe zwischen 2 mm und 3 mm.

Strukturen mit dieser Profilhöhe ermöglichen ein Verwischen der Grenzfläche, was einen besonders natürlich wirkenden Übergang in den Färbungen in Bezug auf Farbübergänge bei Zähnen bewirkt.

Ferner kann vorgesehen sein, dass zum Verpressen in Schritt I) ein Druck zwischen 10 kN/m² bis 500 kN/m² angewendet wird, bevorzugt zwischen 10 kN/m² bis 50 kN/m² angewendet wird.

Hierdurch wird ein festes Fügen der PMMA-basierten Schichten miteinander erreicht und Gaseinschlüsse können aus dem Material herausgedrückt werden.

Bevorzugt kann des Weiteren vorgesehen sein, dass die erste strukturierte Pressfläche und/oder die zweite strukturierte Pressfläche, vorzugsweise alle verwendeten strukturierten Pressflächen, eine Wabenstruktur oder eine Vielzahl von aus der Pressfläche vorstehenden Spitzen aufweist oder eine Vielzahl von aus der Pressfläche vorstehenden pyramidenförmigen oder konischen Erhebungen aufweist, wobei bevorzugt die vorstehenden Spitzen oder die vorstehenden pyramidenförmigen oder konischen Erhebungen in der Pressfläche periodisch angeordnet sind.

Vorzugsweise und sofern angewendet weisen also auch die beiden einander gegenüberliegenden strukturierten Pressflächen eine Vielzahl von aus der Pressfläche vorstehenden Spitzen oder eine Vielzahl von aus der Pressfläche vorstehenden pyramidenförmigen oder konischen Erhebungen auf.

Hierdurch kann die erste strukturierte Pressfläche beziehungsweise die strukturierten Pressflächen auf einfache und kostengünstige Weise gefertigt werden und die aus den PMMA-basierten Massen hergestellten Farbübergänge werden in der gesamten Grenzfläche gleichmäßig diffus und damit natürlich gestaltet.

Es kann auch vorgesehen sein, dass die erste strukturierte Pressfläche und/oder die zweite strukturierte Pressfläche, vorzugsweise alle verwendeten strukturierten Pressflächen, aus Silikon bestehen oder mit Silikon beschichtet sind oder aus einem Metall, insbesondere aus einem Edelstahl, bestehen, wobei bevorzugt das Metall beschichtet ist, besonders bevorzugt mit Teflon oder Silikon beschichtet ist.

Vorzugsweise und sofern angewendet bestehen also auch die beiden einander gegenüberliegenden strukturierten Pressflächen aus Silikon oder aus einem Metall, gegebenenfalls mit Beschichtung.

Diese Materialien lassen sich gut zu strukturierten Pressflächen formen. Metalle haben eine hohe Wärmeleitung und Silikon hat eine geringe Haftung an den fluiden PMMA-basierten Massen.

Des Weiteren kann vorgesehen sein, dass die PMMA-basierten Massen zum Zeitpunkt ihrer Anwendung und bei einer Temperatur von 20 °C eine Viskosität zwischen 1 Pa s und 1000 Pa s aufweisen.

Die Viskosität kann dabei mit einem Viskosimeter gemäß EN ISO 3219 bestimmt werden.

Diese Viskosität führt zu einer geeigneten Formstabilität der strukturierten Oberflächen der PMMA-basierten Massen. Dadurch wird verhindert, dass sich die Struktur der Oberfläche beim Lösen der Pressflächen auflöst und dadurch der Übergang der Färbung zu einer ebenen Grenzfläche wird.

Die der vorliegenden Erfindung zugrundeliegenden Aufgaben werden auch gelöst durch ein Verfahren zum Herstellen von Zahnprothesen, wobei das Verfahren ein zuvor beschriebenes Verfahren umfasst und das Verfahren zusätzlich durch den folgenden Schritt gekennzeichnet ist:
K) Herausarbeiten von einer Zahnprothese oder von mehreren einzelnen Zahnprothesen aus dem vollständig gehärteten Kunststoffkörper nach den Verfahrensschritten A) bis I) und gegebenenfalls J), wobei eine Zahnachse der Zahnprothese oder Zahnachsen der mehreren einzelnen Zahnprothesen von einem basalen Ende der Zahnprothese oder der Zahnprothesen verläuft oder verlaufen, wobei die Zahnprothese oder die Zahnprothesen derart aus dem Kunststoffkörper subtraktiv herausgearbeitet werden, dass die Zahnachse oder die Zahnachsen durch mehrere Schichten der PMMA-basierten Massen des Kunststoffkörpers verläuft oder verlaufen und wobei bevorzugt das Herausarbeiten mit Hilfe eines subtraktiven CAM-Verfahrens erfolgt.

Hiermit wird das Verfahren weiter komplettiert und man erhält als das Ergebnis des Verfahrens Zahnprothesen mit natürlichem Aussehen.

Die der vorliegenden Erfindung zugrundeliegenden Aufgaben werden auch gelöst durch eine Vorrichtung zum Umsetzen eines solchen Verfahrens, die Vorrichtung aufweisend zumindest eine strukturierte Pressfläche und eine Bodenplatte, wobei die zumindest eine strukturierte Pressfläche beheizbar ist, und/oder zumindest zwei einander gegenüberliegend angeordnete strukturierte Pressflächen, die beheizbar sind, zumindest zwei Behälter enthaltend zumindest zwei unterschiedlich gefärbte fluide PMMA-basierte Massen oder zumindest zwei Behälter enthaltend die Ausgangskomponenten zum Herstellen zumindest zweier unterschiedlich gefärbter fluider PMMA-basierter Massen, und eine Presse zum Verpressen zumindest zweier aufeinander gestapelter strukturierter PMMA-basierter Massen miteinander.

Die Vorrichtung ist zur Herstellung der strukturierten PMMA-basierten Massen zur Herstellung eines geschichteten Kunststoffkörpers als Rohling zum Herausfräsen von Zahnprothesen unmittelbar geeignet.

Die unterschiedliche Färbung der fluiden PMMA-basierten Massen kann durch unterschiedliche Färbungsmittel (wie beispielsweise unterschiedliche Farb-Pigmente) erreicht werden aber auch durch unterschiedliche Konzentrationen des gleichen Färbungsmittels. Die Ausgangskomponenten zum Herstellen der zumindest zwei unterschiedlich gefärbten fluiden PMMA-basierten Massen können beispielsweise ein Zementpulver und eine Monomerflüssigkeit zur Herstellung eines fluiden PMMA-Zements und zumindest ein flüssiges oder pulverförmiges Färbungsmittel zur Einfärbung des fluiden PMMA-Zements. Die Herstellung der PMMA-basierten Massen erfolgt dann durch Mischen des Zementpulvers mit der Monomerflüssigkeit und einem der Färbungsmittel, wobei das Färbungsmittel für unterschiedlich gefärbte PMMA-basierte Massen in unterschiedlicher Konzentration zugegeben werden kann oder unterschiedliche Färbungsmittel zugegeben werden kann.

Dabei kann vorgesehen sein, dass die Vorrichtung eine umlaufende Begrenzungswand aufweist, die auf der Bodenplatte angeordnet ist und in der die zumindest eine strukturierte Pressfläche beweglich ist oder die um die zumindest zwei einander gegenüberliegend angeordneten strukturierten Pressflächen herum angeordnet ist.

Hierdurch kann verhindert werden, dass die PMMA-basierten Massen unkontrolliert seitlich auslaufen und es kann eine kompakte Bauweise der Vorrichtung erreicht werden.

Des Weiteren kann vorgesehen sein, dass die Vorrichtung zusätzlich zumindest eine Befüllungseinrichtung zum Auftragen der fluiden PMMA-basierten Massen auf die Bodenplatte oder zwischen die zwei einander gegenüberliegend angeordneten strukturierten Pressflächen aufweist, wobei vorzugsweise die zumindest eine Befüllungseinrichtung zum Einfüllen der PMMA-basierten Massen innerhalb der umlaufenden Begrenzung (sofern vorhanden) geeignet und vorgesehen ist.

Hierdurch kann eine standardisierte Befüllung der Vorrichtung mit fluiden PMMA-basierten Massen erfolgen und so eine gleichbleibende Qualität des geschichteten Kunststoffkörpers gewährleistet werden.

Der Erfindung liegt die überraschende Erkenntnis zugrunde, dass es mit aufgeheizten strukturierten Pressflächen gelingt, in fluiden PMMA-basierten Massen zumindest temporär haltbare Strukturen zu erzeugen, die bei einer Verbindung mit einer weiteren strukturierten PMMA-basierten Masse einen diffusen und damit natürlich wirkenden Übergang von unterschiedlichen Färbungen der PMMA-basierten Massen bewirkt. Durch das Verpressen derartig vorstrukturierter PMMA-basierter Massen werden die hinreichend stabilen Oberflächenstrukturen ineinandergeschoben und lösen sich auch nicht vollständig wieder auf, so dass ein natürlich wirkender Grenzverlauf in dem so erzeugten Kunststoffkörper erhalten bleibt.

Erfindungsgemäße Verfahren erlauben eine dauerhafte Vorstrukturierung von pastösen Oberflächen ohne Anhaftung von Material der PMMA-basierten Massen an den strukturierten Pressflächen. Damit werden anders als bei anderen Verfahren erstmals auch eine stärkere Strukturierung und eine Vergrößerung der Phasengrenzzone bei PMMA-basierten Massen möglich. Diese zeichnen die gemäß diesem Verfahren hergestellten Produkte besonders aus.

Je nach Ausprägung der Texturen und Durchführung können sehr diffuse Phasengrenzen erzeugt werden, jedoch bei Bedarf auch scharf abgegrenzte Übergänge. Das erfindungsgemäße Verfahren sorgt für eine leichte Verfestigung der behandelten Oberflächen, was sich zusätzlich positiv auf eventuelle Entmischungsvorgänge an den Phasengrenzen auswirkt.

Es wurde im Rahmen der vorliegenden Patentanmeldung gefunden, dass ein Strukturieren der pastösen Oberflächen von Methacrylaten wie PMMA mittels normaler mechanischer Tools, zum Beispiel durch Abpressen mit strukturierten Metalloberflächen aufgrund der hohen Klebrigkeit der Werkstoffe nicht möglich ist.

Auch kommt es durch das viskoelastische Verhalten bei PMMA-basierten Massen zu einem erheblichen Rückstelleffekt, so dass die erzeugte Struktur der Oberfläche verschwindet oder zumindest deutlich abgeschwächt wird.

Durch das Aufeinanderlegen der strukturierten zweiten PMMA-basierten Masse auf die strukturierte erste PMMA-basierten Masse beziehungsweise das Einlegen der dritten PMMA-basierten Masse oder der weiteren PMMA-basierten Massen, so dass die strukturierte Oberfläche benachbarter PMMA-basierten Massen zueinander ausgerichtet sind, gemäß Schritt H) kann durch ein definiertes Ausrichten der Flächen zueinander die Verschlüsselung benachbarter PMMA-basierter Massen optional beeinflusst werden. Die exakte Positionierung der PMMA-basierten Massen zueinander ist normalerweise ein Zufallsprodukt-was aufgrund des natürlichen Erscheinungsbilds erwünscht ist. Die Struktur kann zwischen weitgehendem Flachdrücken bis hin zu einem direkten Verschlüsseln unter Erhalt der Abformgeometrien erfolgen.

Erfindungsgemäß erfolgt bei der Herstellung eine Verwendung von Pressflächen mit deutlicher, auch scharfkantiger Struktur, wie beispielsweise und bevorzugt pyramidenförmigen Spitzen mit 2 mm bis 3 mm Höhe analog mechanischen Feilen. Durch das Aufheizen der strukturierten Pressflächen auf Temperaturen zwischen 90°C und 150 °C, bevorzugt zwischen 100 bis 140°C, vor dem Pressen, kann eine Formstabilität der frisch strukturierten Oberflächen erreicht werden. Bevorzugt erfolgt das Abpressen der pastösen Materialien auf den Oberflächen für etwa 5 s bis 30 s unter einem definierten Druck zwischen 10 und 500 kN/m².

Im Folgenden werden Ausführungsbeispiele der Erfindung anhand von neun schematisch dargestellten Figuren und einem Flussdiagramm erläutert, ohne jedoch dabei die Erfindung zu beschränken. Dabei zeigt:
Figur 1: den Ablauf eines erfindungsgemäßen Verfahrens mit einer erfindungsgemäßen Vorrichtung als fünf übereinander angeordnete schematische Teilschnitt-Ansichten der erfindungsgemäßen Vorrichtung zum Umsetzen eines erfindungsgemäßen Verfahrens,
Figur 2: eine schematische perspektivische Ansicht einer zweiten beheizbaren strukturierten Pressplatte zum Umsetzen eines erfindungsgemäßen Verfahrens,
Figur 3: eine schematische Detailansicht einer mit der zweiten strukturierten Pressplatte nach Figur 2 geformten Oberfläche einer PMMA-basierten Masse,
Figur 4: eine schematische Detailansicht als Ausschnittvergrößerung auf die strukturierte Oberfläche einer dritten beheizbaren strukturierten Pressplatte zum Umsetzen eines erfindungsgemäßen Verfahrens,
Figur 5: eine schematische Querschnittansicht der Struktur der dritten strukturierten Pressplatte nach Figur 4,
Figur 6: eine schematische perspektivische Teilansicht auf eine vierte beheizbare strukturierte Pressplatte zum Umsetzen eines erfindungsgemäßen Verfahrens,
Figur 7: eine schematische Aufsicht auf eine strukturierte Oberfläche einer mit einer erhitzten strukturierten Pressplatte geformten PMMA-basierten Masse entsprechend einem erfindungsgemäßen Verfahren,
Figur 8: eine Vergrößerung eines Querschliffs einer Grenzfläche zweier mit Hilfe eines erfindungsgemäßen Verfahrens miteinander verbundenen PMMA-basierten Massen mit unterschiedlicher Färbung bei kurzer Pressung,
Figur 9: eine Vergrößerung eines Querschliffs einer weiteren Grenzfläche zweier mit Hilfe eines erfindungsgemäßen Verfahrens miteinander verbundenen PMMA-basierten Massen mit unterschiedlicher Färbung bei längerer Pressung, und
Figur 10: den Ablauf eines erfindungsgemäßen Verfahrens zur Herstellung eines Kunststoffkörpers mit strukturierten Schichten zur Herstellung von Zahnprothesen als Ablaufdiagramm.

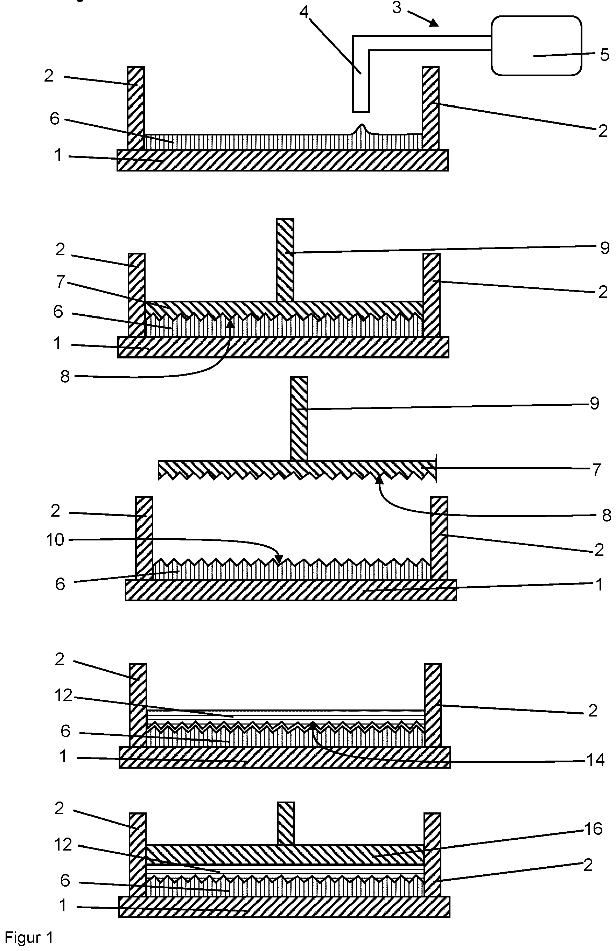

Figur 1 zeigt den Ablauf eines erfindungsgemäßen Verfahrens mit einer erfindungsgemäßen Vorrichtung als fünf übereinander angeordnete schematische Teilquerschnitt-Ansichten der erfindungsgemäßen Vorrichtung zum Umsetzen eines erfindungsgemäßen Verfahrens.

Die Vorrichtung kann eine Bodenplatte 1 und eine Begrenzungswand 2 aufweisen, wobei die Begrenzungswand 2 nach Art einer Springform als Ring auf der Bodenplatte 1 aufliegen kann oder an der Bodenplatte 1 befestigt sein kann. Die Vorrichtung kann ferner eine Befüllungseinrichtung 3 aufweisen. Die Befüllungseinrichtung 3 kann ein Rohr 4 und einen Behälter 5 aufweisen. Eine fluide erste PMMA-basierte Masse 6 kann in einer definierten Menge mit der Befüllungseinrichtung 3 auf der Bodenplatte 1 aufgebracht werden. Die Befüllungseinrichtung 3 kann hierzu beispielsweise als eine Dosierungsvorrichtung nach Art eines Seifenspenders aufgebaut sein, um eine definierte Menge der ersten PMMA-basierten Masser 6 abzugeben. Diese Situation ist in der obersten Abbildung der Figur 1 gezeigt. Die fluide erste PMMA-basierte Masse 6 weist eine erste Färbung auf, beispielsweise eine helle Zahnfärbung.

Die der Bodenplatte 1 gegenüberliegende obere Oberfläche der ersten PMMA-basierten Masse 6 kann mit Hilfe eines Stempels 7 mit einer zuvor erhitzten strukturierten Pressfläche 8 strukturiert werden. Hierzu kann die Pressfläche 8 eine Oberfläche des Stempels 7 bilden. Die Pressfläche 8 kann beim Pressen der ersten PMMA-basierten Masse 6 eine Temperatur zwischen 100 °C und 140 °C aufweisen, wobei vorzugsweise die Temperatur an das Material der ersten PMMA-basierten Masse 6 angepasst werden kann. Zum Beheizen der strukturierten Pressfläche 8 kann in dem Stempel 7 eine elektrische Widerstandsheizung (nicht gezeigt) angeordnet sein. Die Temperatur der strukturierten Pressfläche 8 kann vorzugsweise eingestellt werden. Auch kann vorgesehen sein, dass die Temperatur der strukturierten Pressfläche 8 mit Hilfe eines Temperatursensors (nicht gezeigt) gemessen und/oder geregelt wird.

Die erhitzte Pressfläche 8 wird für mehrere Sekunden auf die noch fluide erste PMMA-basierte Masse 6 gedrückt und dadurch eine strukturierte Oberfläche 10 auf der ersten PMMA-basierten Masse 6 erzeugt. Diese Situation ist in der zweiten Abbildung von oben der Figur 1 gezeigt. Anschließend wird der Stempel 7 mit der strukturierten Pressfläche 8 von der strukturierten Oberfläche 10 der ersten PMMA-basierten Masse 6 gelöst. Die Struktur der strukturierten Oberfläche 10 der ersten PMMA-basierten Masse 6 bleibt dabei erhalten, da durch die von dem Stempel 7 übertragene Wärme eine Verfestigung der ersten PMMA-basierten Masse 6 erreicht wird. Diese Situation ist in der dritten Abbildung von oben der Figur 1 gezeigt.

Die Vorrichtung kann ferner eine zweite Befüllungseinrichtung (nicht gezeigt) aufweisen. In gleicher Weise wie die erste PMMA-basierte Masse 6 kann eine fluide zweite PMMA-basierte Masse 12 mit der Vorrichtung mit Hilfe der Bodenplatte 1, der Begrenzungswand 2 und dem Stempel 7 mit der beheizten strukturierten Pressfläche 8 auf einer Seite strukturiert werden. Die fluide zweite PMMA-basierte Masse 12 weist eine zweite Färbung auf, beispielsweise eine dunkle Zahnfärbung, die von der Färbung der ersten PMMA-basierten Masse 6 abweicht. Die strukturierte zweite PMMA-basierte Masse 12 kann anschließend mit ihrer derart strukturierten Oberfläche 14 auf die strukturierte Oberfläche 10 der ersten strukturierten PMMA-basierten Masse 6 gelegt werden. Diese Situation ist in der vierten Abbildung von oben der Figur 1 gezeigt. Anstatt den Stempel 7 mit der Pressfläche 8 zu verwenden, kann auch ein zweiter Stempel (nicht gezeigt) mit einer anders geformten Pressfläche verwendet werden, so dass die zweite PMMA-basierte Masse 12 eine andere Oberflächenstruktur erhält als die erste PMMA-basierte Masse 6.

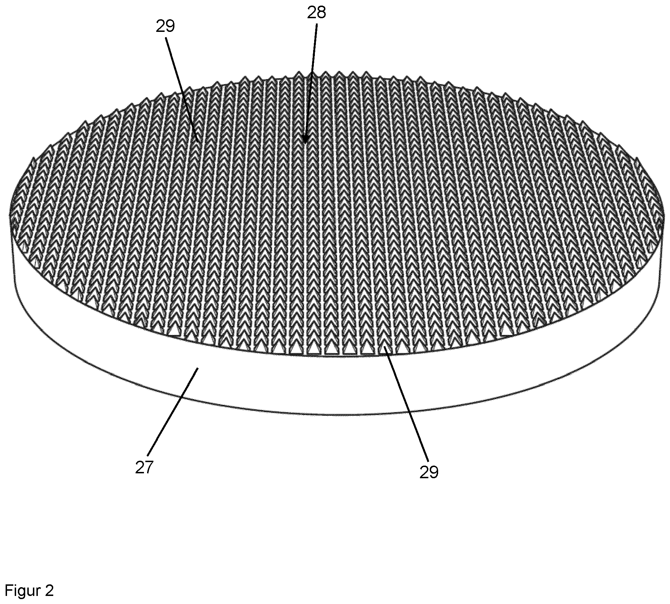

Optional kann zwischen die strukturierte erste PMMA-basierte Masse 6 und die strukturierte zweite PMMA-basierte Masse 12 zumindest eine dritte, auf zwei gegenüberliegenden Seiten strukturierte PMMA-basierte Masse (nicht gezeigt) eingelegt werden. Die Strukturierung der beiden einander gegenüberliegenden strukturierten Oberflächen der dritten PMMA-basierten Masse kann hierzu mit Hilfe zweier einander gegenüberliegend angeordnet beheizter Pressflächen erfolgen. Hierzu kann beispielsweise der Boden 1 durch einen weiteren Stempel (nicht gezeigt) mit einer Pressfläche ersetzt werden, der analog dem Stempel 7 mit der Pressfläche 8 aufgebaut ist, wie beispielsweise der Stempel 27 nach Figur 2.

Anschließend können die strukturierte erste PMMA-basierte Masse 6 und die strukturierte zweite PMMA-basierte Masse 12 und gegebenenfalls die dazwischen angeordnete zumindest eine strukturierte dritte PMMA-basierte Masse durch Pressen miteinander gefügt werden. Hierzu kann eine Presse 16 verwendet werden, die die PMMA-basierten Massen 6, 12 gegeneinander und gegen die Bodenplatte 1 presst. Diese Situation ist in der untersten Abbildung nach Figur 1 gezeigt. Hierzu kann eine Kraft zwischen 1 und 10 Tonnen angewendet werden.

Nach Aushärtung entsteht so ein Kunststoffkörper, der aus den beiden ausgehärteten und über die strukturierten Oberflächen 10, 14 miteinander verbundenen PMMA-basierten Massen 6, 12 besteht. Dieser Kunststoffkörper kann aus der Vorrichtung entnommen werden, um daraus Zahnprothesen mit natürlichem Aussehen mit Hilfe eines subtraktiven Verfahrens zu fertigen.

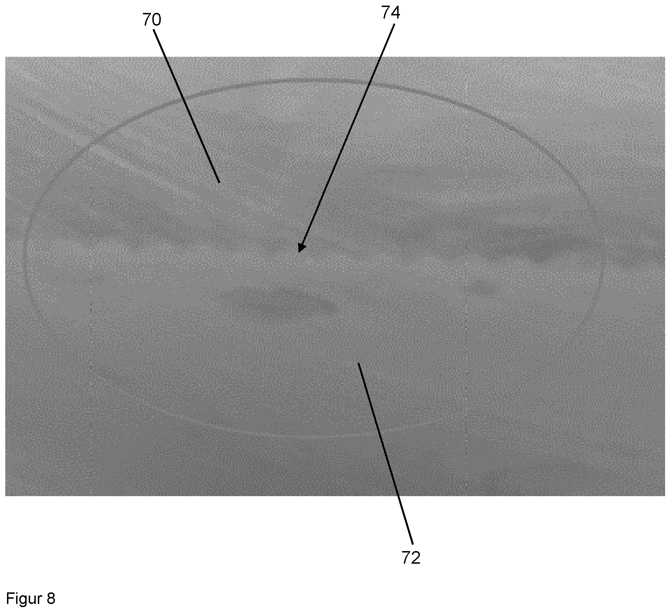

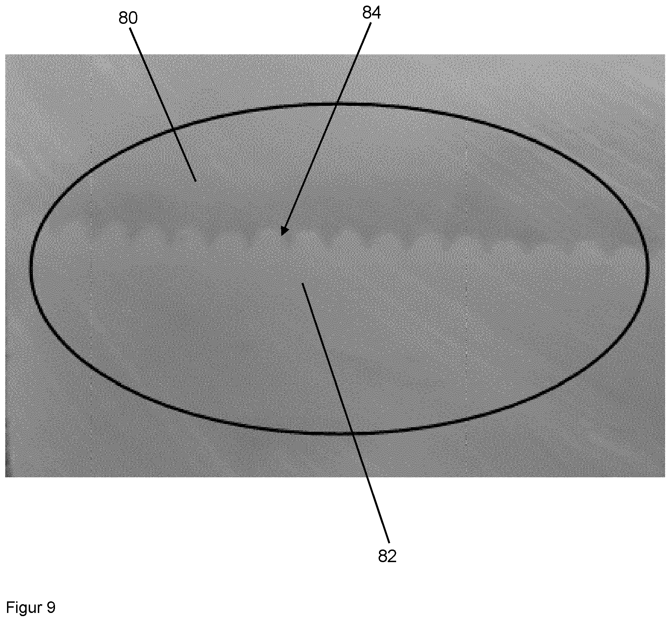

Auf diese Weise kann ein mehrfach geschichteter Kunststoffkörper mit einer Vielzahl von ineinander verzahnten PMMA-basierten Massen hergestellt werden. Durch die Strukturierung erhält man in dem Kunststoff eine natürlich wirkende Grenzfläche zwischen den PMMA-basierten Massen, so wie diese in den Figuren 8 und 9 gezeigt ist.

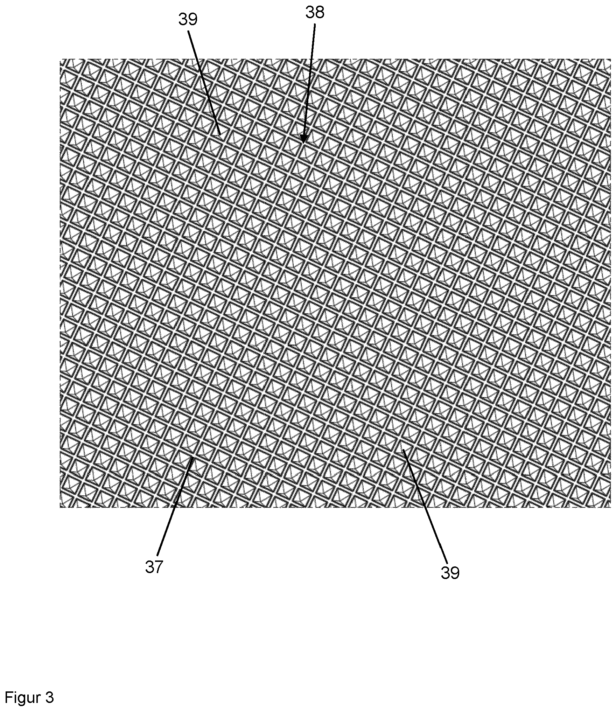

Figur 2 zeigt eine schematische perspektivische Ansicht einer zweiten beheizbaren strukturierten Pressplatte zum Umsetzen eines erfindungsgemäßen Verfahrens und Figur 3 zeigt eine schematische Detailansicht einer mit der zweiten strukturierten Pressplatte nach Figur 2 geformten Oberfläche einer PMMA-basierten Masse 37. Die strukturierte Pressplatte ist ein Stempel 27. Der Stempel 27 kann eine flache zylindrische Form aufweisen. Eine Seite des Stempels 27 ist als beheizbare strukturierte Pressfläche 28 ausgeführt, mit der die PMMA-basierte Masse 37 geformt werden kann. Hierzu können aus der strukturierten Pressfläche 28 mehrere vierseitige pyramidenförmige Spitzen 29 angeordnet sein. Die pyramidenförmigen Spitzen 29 sind als periodisches Gitter auf der strukturierten Pressfläche 28 angeordnet. Der Stempel 27 kann aus einem Metall, wie beispielsweise aus einem Edelstahl, bestehen. Zusätzlich kann im Inneren des Stempels 27 oder außen an seiner der strukturierten Pressfläche 28 gegenüberliegenden Seite ein elektrischer Widerstandsheizer (nicht gezeigt) angeordnet sein, mit dem die strukturierte Pressfläche 28 beheizbar ist. Die pyramidenförmigen Spitzen 29 stehen mit ihrer Spitze zwischen 2 mm und 3 mm von deren Boden ab.

Der Stempel 27 kann in ein Heizgerät eingebaut sein, so dass ein thermostatgesteuertes Aufheizen der Pressplatten möglich ist. Mit diesem Aufbau kann die PMMA-basierte Masse 37 strukturiert werden. Die PMMA-basierte Masse 37 weist dann eine strukturierte Oberfläche 38 auf, die als ein Negativ der strukturierten Pressfläche 28 geformt ist. Dementsprechend weist die strukturierte Oberfläche 38 eine Vielzahl von periodisch nebeneinander angeordneter pyramidenförmiger Vertiefungen 39 auf. Mehrere derartig strukturierter PMMA-basierter Massen 37 mit unterschiedlicher Färbung können mit der strukturierten Oberfläche 38 aufeinandergelegt und anschließend miteinander verpresst werden.

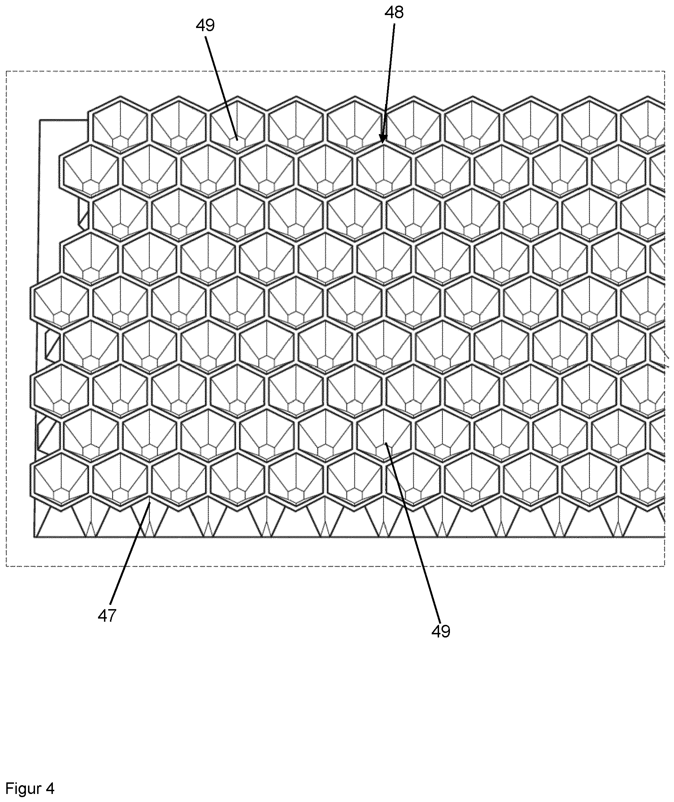

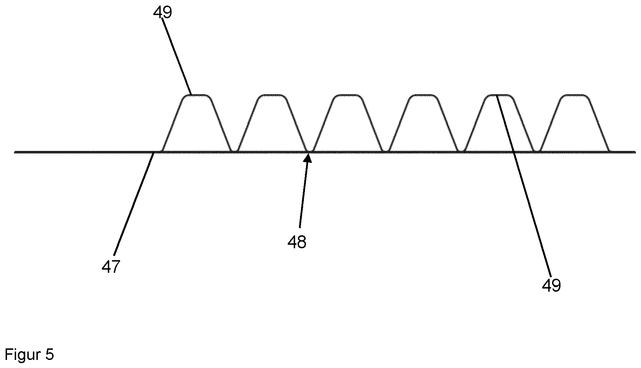

Figur 4 zeigt eine schematische Detailansicht als Ausschnittvergrößerung auf eine strukturierte Oberfläche 48 einer dritten beheizbaren strukturierten Pressplatte 47 zum Umsetzen eines erfindungsgemäßen Verfahrens und Figur 5 eine schematische Querschnittansicht der Struktur der dritten strukturierten Pressplatte 47 hierzu. Die Pressplatte 47 weist eine wabenförmige Strukturierung in Form von sich bis zu einem Boden hin konisch verjüngenden wabenförmigen (sechseckigen) Vertiefungen 49 auf. Eine damit strukturierte PMMA-basierte Masse weist demzufolge ein Negativ der in den Figuren 4 und 5 gezeigten strukturierten Oberfläche 48 auf. Die Tiefe der wabenförmigen Vertiefungen beträgt zwischen 2 mm und 3 mm.

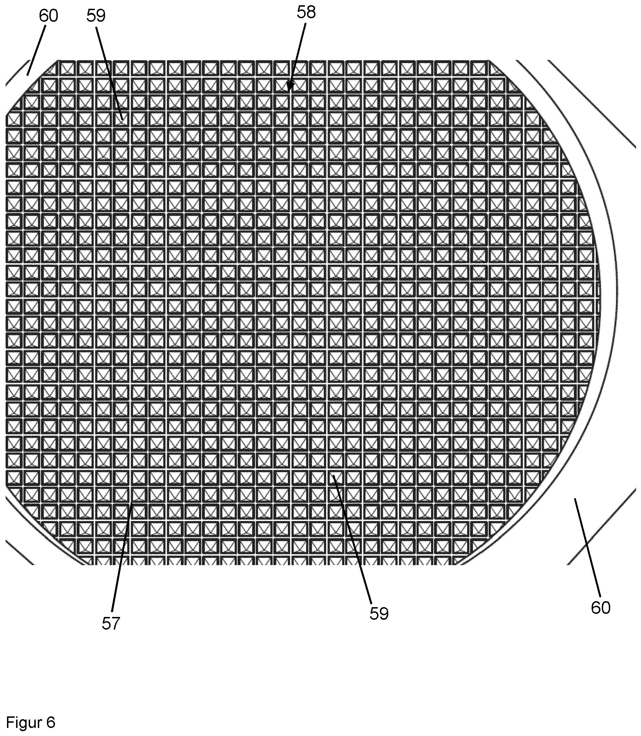

Figur 6 zeigt eine schematische perspektivische Teilansicht auf eine vierte beheizbare strukturierte Pressplatte 57 zum Umsetzen eines erfindungsgemäßen Verfahrens. Die strukturierte Pressplatte 57 ist wie ein Stempel aufgebaut. Eine Seite der strukturierten Pressplatte 57 kann als kreisrunde beheizbare strukturierte Pressfläche 58 ausgeführt sein, mit der eine PMMA-basierte Masse geformt werden kann. Hierzu können aus der strukturierten Pressfläche 58 mehrere vierseitige pyramidenförmige Vertiefungen 59 angeordnet sein. Die pyramidenförmigen Vertiefungen 59 sind als periodisches quadratisches Gitter auf der strukturierten Pressfläche 58 angeordnet. Die pyramidenförmigen Vertiefungen sind zwischen 2 mm und 3 mm tief. Die strukturierte Pressplatte 57 kann einen vorstehenden Rand 60 aufweisen, der die strukturierte Pressfläche 58 an deren Rand umschließt. Die strukturierte Pressplatte 57 kann aus einem temperaturstabilen Kunststoff, wie beispielsweise aus einem Silikon, bestehen. Zusätzlich kann im Inneren der strukturierten Pressplatte 57 oder außen an der der strukturierten Pressfläche 58 gegenüberliegenden Seite der strukturierten Pressplatte 57 ein elektrischer Widerstandsheizer (nicht gezeigt) angeordnet sein, mit dem die strukturierte Pressfläche 58 beheizbar ist. Strukturierte Pressplatten 57 aus Silikon sind einfacher und kostengünstiger zu fertigen. Silikon weist als Material jedoch nicht die gleiche Dauerfestigkeit und damit die gleiche Produktionstauglichkeit wie die meisten Metalle und insbesondere wie Stahl auf. Daher ist der Aufbau der strukturierten Pressflächen aus Metall und insbesondere Stahl erfindungsgemäß bevorzugt.

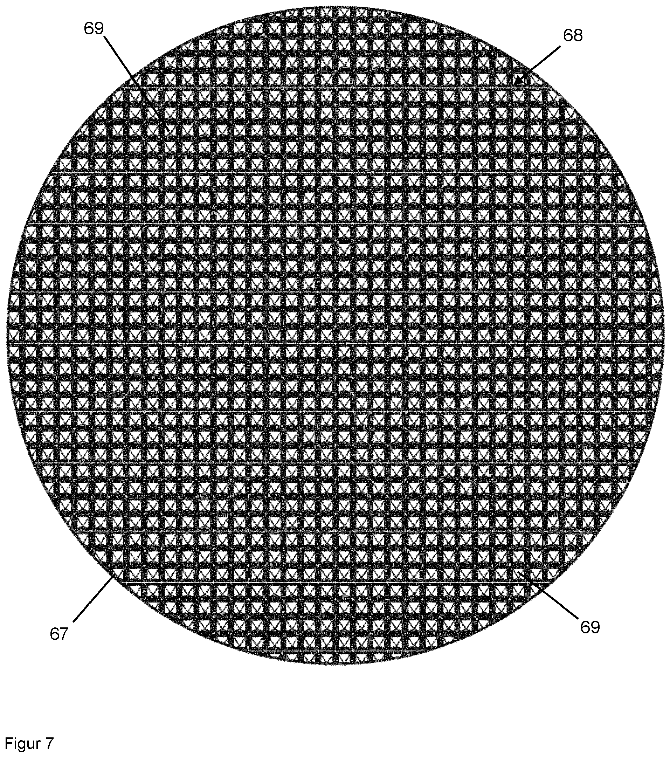

Figur 7 zeigt eine schematische Aufsicht auf eine strukturierte Oberfläche 68 einer mit einer erhitzten strukturierten Pressplatte geformten PMMA-basierten Masse 67 entsprechend einem erfindungsgemäßen Verfahren. Aus der strukturierten Oberfläche 68 erheben sich eine Vielzahl von periodisch als quadratisches Gitter nebeneinander angeordneter pyramidenförmiger Vertiefungen 69. Die pyramidenförmigen Vertiefungen 69 stehen mit ihrer Spitze zwischen 2 mm und 3 mm von deren Basis zurück. Mehrere derartig strukturierter PMMA-basierter Massen 67 mit unterschiedlicher Färbung können mit den strukturierten Oberflächen 68 aufeinandergelegt und anschließend miteinander verpresst werden.

Figur 8 zeigt eine Vergrößerung eines Querschliffs einer Grenzfläche zweier mit Hilfe eines erfindungsgemäßen Verfahrens miteinander verbundenen PMMA-basierten Massen mit unterschiedlicher Färbung bei kurzer Pressung und Figur 9 zeigt eine Vergrößerung eines Querschliffs einer weiteren Grenzfläche zweier mit Hilfe eines erfindungsgemäßen Verfahrens miteinander verbundenen PMMA-basierten Massen mit unterschiedlicher Färbung bei im Vergleich längerer Pressung. Die Aufnahmen wurden mit einem Mikroskop LEICA DMS 1000 und bei einer vier- bis sechsfachen Vergrößerung erstellt.

Zur Herstellung des Schichtverbunds erfolgte Abpressen von Standard Zahnmaterial (Flexecure Dentin Zahnmaterial, der Firma Kulzer GmbH) als erste PMMA-basierte Masse mit einer Temperatur von 115°C für eine Dauer zwischen 20 s bis 70 s bei einem Druck mit einer Presskraft von ca. 100 kg auf eine Fläche von 450 cm². Die Pressung erfolgte mit einer strukturierten Pressfläche 38, wie sie ausschnittsweise in Figur 4 gezeigt ist.

Im Anschluss an das Abpressen wurden die strukturierten PMMA-basierten Massen zusammengefügt, verpresst und polymerisiert.

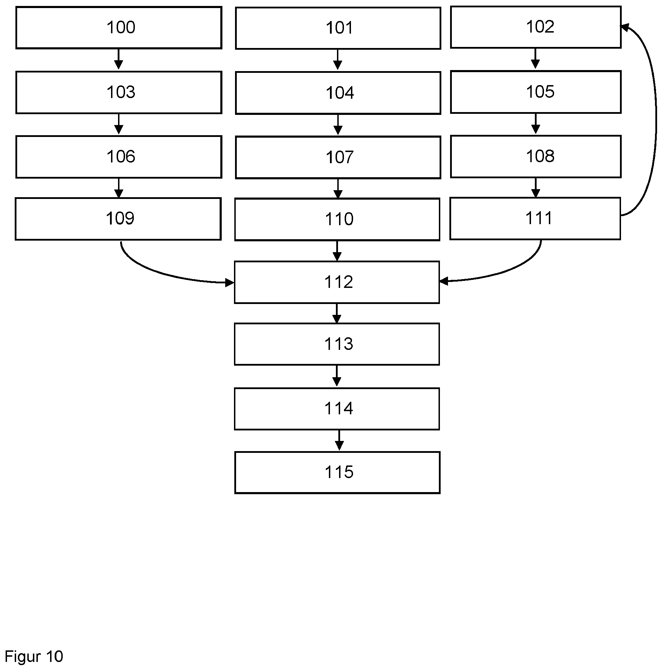

Im Folgenden wird ein beispielhaftes Verfahren anhand der mit Figur 1 beschriebenen erfindungsgemäßen Vorrichtung erläutert. Der Ablauf des beispielhaften Verfahrens ist in dem Ablaufdiagramm nach Figur 10 dargestellt. Die Beschreibung ist aber ohne weiteres auch auf andere Ausführungsbeispiele übertragbar.

In einem Arbeitsschritt 100 kann eine erste fluide PMMA-basierte Masse 6 mit einer ersten Färbung bereitgestellt werden. Parallel dazu kann einem Arbeitsschritt 101 ein Bereitstellen einer zweiten fluiden PMMA-basierten Masse 12 mit einer zweiten Färbung und optional in einem Arbeitsschritt 102 ein Bereitstellen zumindest einer dritten fluiden PMMA-basierten Masse mit einer dritten Färbung erfolgen.

In einem dem Arbeitsschritt 100 folgenden Arbeitsschritt 103 kann ein Auftragen der ersten fluiden PMMA-basierten Masse 6 auf eine Oberfläche erfolgen, wie beispielsweise auf die Oberfläche der Bodenplatte 1. Analog kann in einem dem Arbeitsschritt 101 folgenden Arbeitsschritt 104 ein Auftragen der zweiten fluiden PMMA-basierten Masse 12 auf eine Oberfläche, wie beispielsweise einer Oberfläche der Bodenplatte 1 erfolgen. Analog kann in einem dem optionalen Arbeitsschritt 102 folgenden Arbeitsschritt 105 ein Einbringen der zumindest einen dritten fluiden PMMA-basierten Masse zwischen zwei strukturierte beheizte Pressflächen erfolgen.

In einem dem Arbeitsschritt 103 folgenden Arbeitsschritt 106 kann ein Strukturieren einer Oberfläche 10 der ersten PMMA-basierten Masse 6 mit der erhitzten Pressfläche 8 erfolgen. In gleicher Weise kann in einem dem Arbeitsschritt 104 folgenden Arbeitsschritt 107 ein Strukturieren einer Oberfläche 14 der zweiten PMMA-basierten Masse 12 mit der erhitzten Pressfläche 8 oder einer anderen Pressfläche erfolgen, sowie optional in einem dem Arbeitsschritt 105 folgenden Arbeitsschritt 108 ein Strukturieren zweier gegenüberliegender Oberflächen der zumindest einen dritten PMMA-basierten Masse mit den zwei strukturierten erhitzten Pressflächen.

Nachfolgend kann in einem dem Arbeitsschritt 106 folgenden Arbeitsschritt 109 ein Lösen der Pressfläche 8 von der ersten PMMA-basierten Masse 6 erfolgen. Ebenso kann in einem dem Arbeitsschritt 107 folgenden Arbeitsschritt 110 ein Lösen der Pressfläche 8 oder der anderen Pressfläche von der zweiten PMMA-basierten Masse 12 erfolgen. In dem optionalen Strang des Verfahrens kann einem dem optionalen Arbeitsschritt 108 folgenden optionalen Arbeitsschritt 111 ein Lösen der zwei Pressflächen von der zumindest einen dritten PMMA-basierten Masse erfolgen.

Nach diesen Arbeitsschritten kann nun in einem Arbeitsschritt 112 die strukturierte zweite PMMA-basierten Masse 12 auf der strukturierten ersten PMMA-basierten Masse 6 angeordnet werden, so dass die beiden strukturierten Oberflächen 10, 14 der strukturierten ersten PMMA-basierten Masse 6 und der strukturierten zweiten PMMA-basierten Masse 12 zueinander ausgerichtet sind. Alternativ dazu kann auch ein Anordnen der zumindest einen strukturierten dritten PMMA-basierten Masse zwischen die strukturierte erste PMMA-basierte Masse 6 und die strukturierte zweite PMMA-basierte Masse 12 erfolgen, so dass die beiden strukturierten Oberflächen 10, 14 der strukturierten ersten PMMA-basierten Masse 6 und der strukturierten zweiten PMMA-basierten Masse 12 zueinander ausgerichtet sind.

Anschließend erfolgt in einem Arbeitsschritt 113 ein Verpressen aller aufeinander angeordneter PMMA-basierter Massen 6, 12 miteinander und ein Härten der PMMA-basierten Massen 6, 12.

In einem Arbeitsschritt 114 kann der so entstandene, gehärtete und geschichtete Kunststoffkörper entnommen werden.

In einem optionalen Arbeitsschritt 115 kann im Anschluss zumindest eine Zahnprothese aus dem gehärteten geschichteten Kunststoffkörper mit Hilfe eines subtraktiven Verfahrens, wie beispielsweise mit einer CAM-Fräse, herausgefräst werden.

### Bezugszeichenliste

- 1: Bodenplatte
- 2: Begrenzungswand
- 3: Befüllungseinrichtung
- 4: Rohr
- 5: Behälter
- 6: PMMA-basierte Masse
- 7: Stempel
- 8: Strukturierte Pressfläche
- 9: Stempel
- 10: Strukturierte Oberfläche
- 12: zweite PMMA-basierte Masse
- 14: Strukturierte Oberfläche
- 16: Presse
- 27: Stempel
- 28: Strukturierte Pressfläche
- 29: Pyramidenförmige Spitzen
- 37: Strukturierte PMMA-basierte Masse
- 38: Strukturierte Oberfläche
- 39: Pyramidenförmige Vertiefung
- 47: Pressplatte
- 48: Strukturierte Pressfläche
- 49: Wabenförmige Vertiefung
- 57: Pressplatte
- 58: Strukturierte Pressfläche
- 59: Pyramidenförmige Vertiefung
- 60: Rand
- 67: Strukturierte PMMA-basierte Masse
- 68: Strukturierte Oberfläche
- 69: Pyramidenförmige Vertiefung
- 70: erste PMMA-basierte Masse
- 72: zweite PMMA-basierte Masse
- 74: Grenzfläche
- 80: erste PMMA-basierte Masse
- 82: zweite PMMA-basierte Masse
- 84: Grenzfläche
- 100: Arbeitsschritt: Bereitstellen einer ersten fluiden PMMA-basierten Masse mit einer ersten Färbung
- 101: Arbeitsschritt: Bereitstellen einer zweiten fluiden PMMA-basierten Masse mit einer zweiten Färbung
- 102: Optionaler Arbeitsschritt: Bereitstellen zumindest einer dritten fluiden PMMA-basierten Masse mit einer dritten Färbung
- 103: Arbeitsschritt: Auftragen der ersten fluiden PMMA-basierten Masse auf eine Oberfläche
- 104: Arbeitsschritt: Auftragen der zweiten fluiden PMMA-basierten Masse auf eine Oberfläche
- 105: Optionaler Arbeitsschritt: Einbringen der zumindest einen dritten fluiden PMMA-basierten Masse zwischen zwei strukturierte beheizte Pressflächen
- 106: Arbeitsschritt: Strukturieren einer Oberfläche der ersten PMMA-basierten Masse mit einer erhitzten Pressfläche
- 107: Arbeitsschritt: Strukturieren einer Oberfläche der zweiten PMMA-basierten Masse mit einer erhitzten Pressfläche
- 108: Optionaler Arbeitsschritt: Strukturieren zweier gegenüberliegender Oberflächen der zumindest einen dritten PMMA-basierten Masse mit den zwei strukturierten erhitzten Pressflächen
- 109: Arbeitsschritt: Lösen der Pressfläche von der ersten PMMA-basierten Masse
- 110: Arbeitsschritt: Lösen der Pressfläche von der zweiten PMMA-basierten Masse
- 111: Optionaler Arbeitsschritt: Lösen der zwei Pressflächen von der zumindest einen dritten PMMA-basierten Masse
- 112: Arbeitsschritt: Anordnen der strukturierten zweiten PMMA-basierten Masse auf der strukturierten ersten PMMA-basierten Masse, so dass die beiden strukturierten Oberflächen der strukturierten ersten und zweiten PMMA-basierten Masse zueinander ausgerichtet sind, oder Anordnen der zumindest einen strukturierten dritten PMMA-basierten Masse zwischen die strukturierte erste PMMA-basierte Masse und die strukturierte zweite PMMA-basierte Masse, so dass die beiden strukturierten Oberflächen der strukturierten ersten und zweiten PMMA-basierten Masse zueinander ausgerichtet sind
- 113: Arbeitsschritt: Verpressen aller aufeinander angeordneter PMMA-basierter Massen miteinander und Härten der PMMA-basierten Massen
- 114: Arbeitsschritt: Entnehmen des gehärteten geschichteten Kunststoffkörpers
- 115: Optionaler Arbeitsschritt: Fertigen zumindest einer Zahnprothese aus dem gehärteten geschichteten Kunststoffkörper

## Patentansprüche

1. Verfahren zur Herstellung eines Kunststoffkörpers mit strukturierten Schichten zur Herstellung von Zahnprothesen, wobei das Verfahren folgende Schritte aufweist:
A) Bereitstellen einer ersten PMMA-basierten Masse (6, 37, 67, 70, 80) und einer zweiten PMMA-basierten Masse (12, 37, 67, 72, 82), wobei die erste PMMA-basierte Masse nicht ausgehärtet ist und eine erste Färbung aufweist und wobei die zweite PMMA-basierte Masse nicht ausgehärtet ist und eine zweite Färbung aufweist, wobei die zweite Färbung der zweiten PMMA-basierten Masse von der ersten Färbung der ersten PMMA-basierten Masse abweicht;
B) Aufheizen einer ersten strukturierten Pressfläche (8, 28, 48, 58) auf eine Temperatur zwischen 90°C und 150°C;
C) Pressen der ersten PMMA-basierten Masse mit der aufgeheizten ersten strukturierten Pressfläche, wobei dadurch eine strukturierte Oberfläche (10, 38, 68) der ersten PMMA-basierten Masse entsteht;
D) nachfolgendes Lösen der ersten Pressfläche von der strukturierten ersten PMMA-basierten Masse, wobei die strukturierte Oberfläche der ersten PMMA-basierten Masse erhalten bleibt; und
E) Aufheizen der ersten strukturierten Pressfläche auf eine Temperatur zwischen 90°C und 150°C oder Aufheizen einer zweiten strukturierten Pressfläche (8, 28, 48, 58) auf eine Temperatur zwischen 90°C und 150°C;
F) Pressen der zweiten PMMA-basierten Masse mit der ersten aufgeheizten strukturierten Pressfläche oder der zweiten aufgeheizten strukturierten Pressfläche, wobei dadurch eine strukturierte Oberfläche (14, 38, 68) der zweiten PMMA-basierten Masse entsteht;
G) nachfolgendes Lösen der ersten Pressfläche oder der zweiten Pressfläche von der strukturierten zweiten PMMA-basierten Masse, wobei die strukturierte Oberfläche der zweiten PMMA-basierten Masse erhalten bleibt;
H) nachfolgendes Aufeinanderlegen der strukturierten zweiten PMMA-basierten Masse auf die strukturierte erste PMMA-basierten Masse, so dass die strukturierte Oberfläche der zweiten PMMA-basierten Masse in Richtung der strukturierten Oberfläche der ersten PMMA-basierten Masse ausgerichtet ist; und
I) nachfolgendes Verpressen der ersten strukturierten PMMA-basierten Masse mit der zweiten strukturierten PMMA-basierten Masse, so dass eine feste Verbindung zwischen der ersten PMMA-basierten Masse und der zweiten PMMA-basierten Masse erfolgt.

2. Verfahren nach Anspruch 1, **gekennzeichnet durch**
Schritt J) Aushärten der strukturierten ersten PMMA-basierten Masse und der damit verpressten zweiten PMMA-basierten Masse, wobei vorzugsweise Schritt J) nach Schritt I) erfolgt.

3. Verfahren nach einem der vorangehenden Ansprüche **dadurch gekennzeichnet, dass** ein Pressen einer nicht ausgehärteten dritten PMMA-basierten Masse mit zwei einander gegenüberliegend angeordneten aufgeheizten strukturierten Pressflächen erfolgt, wobei dadurch auf beiden Seiten der dritten PMMA-basierten Masse eine strukturierte Oberfläche entsteht, wobei die dritte PMMA-basierte Masse eine dritte Färbung aufweist, die von der ersten Färbung der ersten PMMA-basierten Masse und von der zweiten Färbung der zweiten PMMA-basierten Masse abweicht,
nachfolgendes Lösen der Pressflächen von der beidseitig strukturierten dritten PMMA-basierten Masse, wobei die beiden strukturierten Oberflächen der dritten PMMA-basierten Masse erhalten bleiben, wobei
in Schritt H) die strukturierte dritte PMMA-basierte Masse zwischen der strukturierten zweiten PMMA-basierten Masse und der strukturierten ersten PMMA-basierten Masse angeordnet ist, so dass die strukturierten Oberflächen aneinander anliegen, und wobei in Schritt I) das nachfolgende Verpressen der ersten strukturierten PMMA-basierten Masse mit der zweiten strukturierten PMMA-basierten Masse und mit der dazwischen angeordneten dritten strukturierten PMMA-basierten Masse erfolgt, so dass eine feste Verbindung zwischen der ersten PMMA-basierten Masse, der zweiten PMMA-basierten Masse und der dritten PMMA-basierten Masse erfolgt.

4. Verfahren nach Anspruch 1 oder 2, **dadurch gekennzeichnet, dass**
in Schritt H) insgesamt mehrere weitere PMMA-basierte Massen zwischen der ersten strukturierten PMMA-basierten Masse und der strukturierten zweiten PMMA-basierten Masse angeordnet werden, wobei bevorzugt die Färbungen benachbarter PMMA-basierter Massen der ersten, der zweiten und der mehreren PMMA-basierten Massen voneinander abweichen, wobei
vor Schritt H) jede der mehreren weiteren PMMA-basierten Massen mit zwei einander gegenüberliegend angeordneten aufgeheizten strukturierten Pressflächen strukturiert werden, wobei dadurch auf beiden Seiten der mehreren weiteren PMMA-basierten Massen eine strukturierte Oberfläche entsteht, und danach ein Lösen der Pressflächen von den beidseitig strukturierten mehreren weiteren PMMA-basierten Massen erfolgt, wobei die beiden strukturierten Oberflächen der mehreren weiteren PMMA-basierten Massen erhalten bleiben,
in Schritt I) das nachfolgende Verpressen der ersten strukturierten PMMA-basierten Masse mit der zweiten strukturierten PMMA-basierten Masse und mit den dazwischen angeordneten mehreren weiteren strukturierten PMMA-basierten Masse erfolgt, so dass eine feste Verbindung zwischen der ersten PMMA-basierten Masse, der zweiten PMMA-basierten Masse und den dazwischen angeordneten mehreren weiteren strukturierten PMMA-basierten Masse erfolgt.

5. Verfahren nach einem der vorangehenden Ansprüche **dadurch gekennzeichnet, dass** das Pressen der ersten PMMA-basierten Masse in Schritt C) mit der aufgeheizten ersten strukturierten Pressfläche und das Pressen der zweiten PMMA-basierten Masse in Schritt F) mit der ersten strukturierten Pressfläche oder mit der aufgeheizten strukturierten zweiten Pressfläche mit einem Druck zwischen 10 kN/m² und 500 kN/m² erfolgt, bevorzugt mit einem Druck zwischen 10 kN/m² und 100 kN/m² erfolgt, besonders bevorzugt mit einem Druck zwischen 10 kN/m² und 50 kN/m² erfolgt.

6. Verfahren nach Anspruch 3 oder 4 **dadurch gekennzeichnet, dass** das Pressen der dritten PMMA-basierten Masse oder der weiteren PMMA-basierten Massen mit den zwei einander gegenüberliegend angeordneten aufgeheizten strukturierten Pressflächen mit einem Druck zwischen 10 kN/m² und 500 kN/m² erfolgt, bevorzugt mit einem Druck zwischen 10 kN/m² und 100 kN/m² erfolgt, besonders bevorzugt mit einem Druck zwischen 10 kN/m² und 50 kN/m² erfolgt.

7. Verfahren nach einem der vorangehenden Ansprüche **dadurch gekennzeichnet, dass** das Pressen der ersten PMMA-basierten Masse in Schritt C) mit der aufgeheizten ersten strukturierten Pressfläche und das Pressen der zweiten PMMA-basierten Masse in Schritt G) mit der aufgeheizten ersten strukturierten Pressfläche oder mit der aufgeheizten zweiten strukturierten Pressfläche für einen Zeitraum zwischen 1 s und 50 s lang erfolgt, bevorzugt für einen Zeitraum zwischen 5 s und 30 s lang erfolgt, wobei vorzugsweise und sofern vorhanden das Pressen der dritten PMMA-basierten Masse oder der mehreren weiteren PMMA-basierten Massen mit den zwei einander gegenüberliegend angeordneten aufgeheizten strukturierten Pressflächen für einen Zeitraum zwischen 1 s und 50 s erfolgt, bevorzugt für einen Zeitraum zwischen 5 s und 30 s erfolgt.

8. Verfahren nach einem der vorangehenden Ansprüche **dadurch gekennzeichnet, dass** die erste strukturierte Pressfläche und/oder die zweite strukturierte Pressfläche während des Pressens beheizt wird oder werden, vorzugsweise alle verwendeten strukturierten Pressflächen während des Pressens beheizt werden.

9. Verfahren nach einem der vorangehenden Ansprüche **dadurch gekennzeichnet, dass** die erste strukturierte Pressfläche und/oder die zweite strukturierte Pressfläche, vorzugsweise alle verwendeten strukturierten Pressflächen, Strukturen mit einer Profilhöhe zwischen 1 mm und 5 mm aufweisen, bevorzugt mit einer Profilhöhe zwischen 2 mm und 3 mm aufweisen.

10. Verfahren nach einem der vorangehenden Ansprüche **dadurch gekennzeichnet, dass** zum Verpressen in Schritt I) ein Druck zwischen 10 kN/m² bis 500 kN/m² angewendet wird, bevorzugt zwischen 10 kN/m² bis 50 kN/m² angewendet wird.

11. Verfahren nach einem der vorangehenden Ansprüche **dadurch gekennzeichnet, dass** die erste strukturierte Pressfläche und/oder die zweite strukturierte Pressfläche, vorzugsweise alle verwendeten strukturierten Pressflächen, eine Wabenstruktur oder eine Vielzahl von aus der Pressfläche vorstehenden Spitzen aufweist oder eine Vielzahl von aus der Pressfläche vorstehenden pyramidenförmigen oder konischen Erhebungen aufweist, wobei bevorzugt die vorstehenden Spitzen oder die vorstehenden pyramidenförmigen oder konischen Erhebungen in der Pressfläche periodisch angeordnet sind.

12. Verfahren nach einem der vorangehenden Ansprüche **dadurch gekennzeichnet, dass** die erste strukturierte Pressfläche und/oder die zweite strukturierte Pressfläche, vorzugsweise alle verwendeten strukturierten Pressflächen, aus Silikon bestehen oder mit Silikon beschichtet sind oder aus einem Metall, insbesondere aus einem Edelstahl, bestehen, wobei bevorzugt das Metall beschichtet ist, besonders bevorzugt mit Teflon oder Silikon beschichtet ist.

13. Verfahren nach einem der vorangehenden Ansprüche **dadurch gekennzeichnet, dass** die PMMA-basierten Massen zum Zeitpunkt ihrer Anwendung und bei einer Temperatur von 20 °C eine Viskosität zwischen 1 Pa s und 1000 Pa s aufweisen.

14. Verfahren zum Herstellen von Zahnprothesen, wobei das Verfahren ein Verfahren nach einem der vorangehenden Ansprüche umfasst und das Verfahren zusätzlich durch den folgenden Schritt gekennzeichnet ist:
K) Herausarbeiten von einer Zahnprothese oder von mehreren einzelnen Zahnprothesen aus dem vollständig gehärteten Kunststoffkörper nach den Verfahrensschritten A) bis I) und gegebenenfalls J), wobei eine Zahnachse der Zahnprothese oder Zahnachsen der mehreren einzelnen Zahnprothesen von einem basalen Ende der Zahnprothese oder der Zahnprothesen verläuft oder verlaufen, wobei die Zahnprothese oder die Zahnprothesen derart aus dem Kunststoffkörper subtraktiv herausgearbeitet werden, dass die Zahnachse oder die Zahnachsen durch mehrere Schichten der PMMA-basierten Massen des Kunststoffkörpers verläuft oder verlaufen und wobei bevorzugt das Herausarbeiten mit Hilfe eines subtraktiven CAM-Verfahrens erfolgt.

15. Vorrichtung zum Umsetzen eines Verfahrens nach einem der vorangehenden Ansprüche, die Vorrichtung aufweisend
zumindest eine strukturierte Pressfläche (8, 28, 48, 58) und eine Bodenplatte (1), wobei die zumindest eine strukturierte Pressfläche (8, 28, 48, 58) beheizbar ist, und/oder zumindest zwei einander gegenüberliegend angeordnete strukturierte Pressflächen (8, 28, 48, 58), die beheizbar sind,
zumindest zwei Behälter (5) enthaltend zumindest zwei unterschiedlich gefärbte fluide PMMA-basierte Massen (6, 12, 37, 67, 70, 72, 80, 82) oder zumindest zwei Behälter (5) enthaltend die Ausgangskomponenten zum Herstellen zumindest zweier unterschiedlich gefärbter fluider PMMA-basierter Massen (6, 12, 37, 67, 70, 72, 80, 82), und
eine Presse (16) zum Verpressen zumindest zweier aufeinander gestapelter strukturierter PMMA-basierter Massen (6, 12, 37, 67, 70, 72, 80, 82) miteinander.

16. Vorrichtung nach Anspruch 15, **dadurch gekennzeichnet, dass**
die Vorrichtung eine umlaufende Begrenzungswand (2) aufweist, die auf der Bodenplatte (1) angeordnet ist und in der die zumindest eine strukturierte Pressfläche (8, 28, 48, 58) beweglich ist oder die um die zumindest zwei einander gegenüberliegend angeordneten strukturierten Pressflächen (8, 28, 48, 58) herum angeordnet ist.

17. Vorrichtung nach Anspruch 15 oder 16, **dadurch gekennzeichnet, dass**
die Vorrichtung zusätzlich zumindest eine Befüllungseinrichtung (3) zum Auftragen der fluiden PMMA-basierten Massen (6, 12, 37, 67, 70, 72, 80, 82) auf die Bodenplatte (1) oder zwischen die zwei einander gegenüberliegend angeordneten strukturierten Pressflächen (8, 28, 48, 58) aufweist, wobei vorzugsweise die zumindest eine Befüllungseinrichtung (3) zum Einfüllen der PMMA-basierten Massen (6, 12, 37, 67, 70, 72, 80, 82) innerhalb der umlaufenden Begrenzung (2) geeignet und vorgesehen ist.

## Claims

1. A method for producing a plastics body with patterned layers for producing dental prostheses, wherein the method having the following steps:
A) providing a first PMMA-based compound (6, 37, 67, 70, 80) and a second PMMA-based compound (12, 37, 67, 72, 82), wherein the first PMMA-based compound is uncured and has a first coloration and wherein the second PMMA-based compound is uncured and has a second coloration, wherein the second coloration of the second PMMA-based compound differs from the first coloration of the first PMMA-based compound;
B) heating of a first patterned pressing surface (8, 28, 48, 58) to a temperature of between 90°C and 150°C;
C) pressing of the first PMMA-based compound with the heated first patterned pressing surface, wherein a patterned surface (10, 38, 68) of the first PMMA-based compound is obtained in this manner;
D) subsequent detachment of the first pressing surface from the patterned first PMMA-based compound, wherein the patterned surface of the first PMMA-based compound is retained; and
E) heating of the first patterned pressing surface to a temperature of between 90°C and 150°C or heating of a second patterned pressing surface (8, 28, 48, 58) to a temperature of between 90°C and 150°C;
F) pressing of the second PMMA-based compound with the heated first patterned pressing surface or the heated second patterned pressing surface, wherein a patterned surface (14, 38, 68) of the second PMMA-based compound is obtained in this manner;
G) subsequent detachment of the first pressing surface or the second pressing surface from the patterned second PMMA-based compound, wherein the patterned surface of the second PMMA-based compound is retained;
H) subsequent laying of the patterned second PMMA-based compound on the patterned first PMMA-based compound, such that the patterned surface of the second PMMA-based compound is oriented toward the patterned surface of the first PMMA-based compound; and
I) subsequent compression molding of the first patterned PMMA-based compound with the second patterned PMMA-based compound, such that a solid bond is created between the first PMMA-based compound and the second PMMA-based compound.

2. The method according to Claim 1, **characterized by**
step J) curing of the patterned first PMMA-based compound and the second PMMA-based compound compression molded therewith, wherein step J) preferably proceeds after step I).

3. The method according to any one of the preceding claims, **characterized in that**
pressing of an uncured third PMMA-based compound proceeds with two heated patterned pressing surfaces arranged opposite one another, wherein a patterned surface is consequently obtained on both sides of the third PMMA-based compound, wherein the third PMMA-based compound has a third coloration which differs from the first coloration of the first PMMA-based compound and from the second coloration of the second PMMA-based compound,
subsequent detachment of the pressing surfaces from the third PMMA-based compound patterned on both sides, wherein the two patterned surfaces of the third PMMA-based compound are retained, wherein
in step H) the patterned third PMMA-based compound is arranged between the patterned second PMMA-based compound and the patterned first PMMA-based compound, such that the patterned surfaces lie against one another, and wherein
in step I) subsequent compression molding of the first patterned PMMA-based compound with the second patterned PMMA-based compound and with the third patterned PMMA-based compound arranged therebetween proceeds such that a solid bond is created between the first PMMA-based compound, the second PMMA-based compound and the third PMMA-based compound.

4. The method according to Claim 1 or 2, **characterized in that**
in step H) overall a plurality of further PMMA-based compounds are arranged between the first patterned PMMA-based compound and the patterned second PMMA-based compound, wherein the colorations of adjacent PMMA-based compounds of the first, second and plurality of PMMA-based compounds preferably differ from one another, wherein
before step H) each of the plurality of further PMMA-based compounds is patterned with two heated patterned pressing surfaces arranged opposite one another, wherein a patterned surface is consequently obtained on both sides of the plurality of further PMMA-based compounds, and the pressing surfaces are subsequently detached from the plurality of further PMMA-based compounds patterned on both sides, wherein the two patterned surfaces of the plurality of further PMMA-based compounds are retained, in step I) subsequent compression molding of the first patterned PMMA-based compound with the second patterned PMMA-based compound and with the plurality of further patterned PMMA-based compounds arranged therebetween proceeds such that a solid bond is created between the first PMMA-based compound, the second PMMA-based compound and the plurality of further PMMA-based compounds arranged therebetween.

5. The method according to any one of the preceding claims, **characterized in that**
pressing of the first PMMA-based compound in step C) with the heated first patterned pressing surface and pressing of the second PMMA-based compound in step F) with the first patterned pressing surface or with the second heated patterned pressing surface proceeds with a pressure of between 10 kN/m² and 500 kN/m², preferably with a pressure of between 10 kN/m² and 100 kN/m², particularly preferably with a pressure of between 10 kN/m² and 50 kN/m².

6. The method according to Claim 3 or 4, **characterized in that**
pressing of the third PMMA-based compound or of the further PMMA-based compounds with the two heated patterned pressing surfaces arranged opposite one another proceeds with a pressure of between 10 kN/m² and 500 kN/m², preferably with a pressure of between 10 kN/m² and 100 kN/m², particularly preferably with a pressure of between 10 kN/m² and 50 kN/m².

7. The method according to any one of the preceding claims, **characterized in that**
pressing of the first PMMA-based compound in step C) with the heated first patterned pressing surface and pressing of the second PMMA-based compound in step G) with the heated first patterned pressing surface or with the heated second patterned pressing surface proceeds for a period of between 1 s and 50 s, preferably for a period of between 5 s and 30 s, wherein preferably and if present, pressing of the third PMMA-based compound or of the plurality of further PMMA-based compounds with the two heated patterned pressing surfaces arranged opposite one another proceeds for a period of between 1 s and 50 s, preferably for a period of between 5 s and 30 s.

8. The method according to any one of the preceding claims, **characterized in that**
the first patterned pressing surface and/or the second patterned pressing surface is or are heated during pressing, preferably all the patterned pressing surfaces used are heated during pressing.

9. The method according to any one of the preceding claims, **characterized in that**
the first patterned pressing surface and/or the second patterned pressing surface, preferably all the patterned pressing surfaces used, have patterns with a profile height of between 1 mm and 5 mm, preferably with a profile height of between 2 mm and 3 mm.

10. The method according to any one of the preceding claims, **characterized in that**
a pressure of between 10 kN/m² and 500 kN/m², preferably of between 10 kN/m² and 50 kN/m² is applied for the compression molding in step I).

11. The method according to any one of the preceding claims, **characterized in that**
the first patterned pressing surface and/or the second patterned pressing surface, preferably all the patterned pressing surfaces used, have a honeycomb pattern or a plurality of peaks projecting from the pressing surface or a plurality of pyramidal or conical protrusions projecting from the pressing surface, wherein the projecting peaks or the projecting pyramidal or conical protrusions are preferably arranged periodically in the pressing surface.

12. The method according to any one of the preceding claims, **characterized in that**
the first patterned pressing surface and/or the second patterned pressing surface, preferably all the patterned pressing surfaces used, consist of silicone or are coated with silicone or consist of a metal, in particular of a stainless steel, wherein the metal is preferably coated, particularly preferably coated with Teflon or silicone.

13. The method according to any one of the preceding claims, **characterized in that**
the PMMA-based compounds have a viscosity of between 1 Pa·s and 1000 Pa·s at their time of use and at a temperature of 20°C.

14. A method for producing dental prostheses, wherein the method comprises a method according to any one of the preceding claims and the method is additionally **characterized by** the following step:
K) carving out of a dental prosthesis or a plurality of individual dental prostheses from the completely cured plastics body after method steps A) to I) and optionally J), wherein a tooth axis of the dental prosthesis or tooth axes of the plurality of individual dental prostheses extends or extend from a basal end of the dental prosthesis or dental prostheses, wherein the dental prosthesis or the dental prostheses are subtractively carved out from the plastics body in such a manner that the tooth axis or the tooth axes extends or extend through a plurality of layers of the PMMA-based compounds of the plastics body and wherein carving out preferably proceeds with the assistance of a subtractive CAM process.

15. A device for implementing a method according to any one of the preceding claims, the device comprising
at least one patterned pressing surface (8, 28, 48, 58) and a base plate (1), wherein the at least one patterned pressing surface (8, 28, 48, 58) is heatable, and/or at least two patterned pressing surfaces (8, 28, 48, 58) arranged opposite one another which are heatable,
at least two containers (5) containing at least two differently colored fluid PMMA-based compounds (6, 12, 37, 67, 70, 72, 80, 82) or at least two containers (5) containing the starting components for producing at least two differently colored fluid PMMA-based compounds (6, 12, 37, 67, 70, 72, 80, 82), and
a press (16) for compression molding together at least two patterned PMMA-based compounds (6, 12, 37, 67, 70, 72, 80, 82) stacked on one another.

16. The device according to Claim 15, **characterized in that**
the device has a circumferential boundary wall (2) which is arranged on the base plate (1) and in which the at least one patterned pressing surface (8, 28, 48, 58) is movable or which is arranged around the at least two patterned pressing surfaces (8, 28, 48, 58) arranged opposite one another.

17. The device according to Claim 15 or 16, **characterized in that**
the device additionally has at least one filling means (3) for applying the fluid PMMA-based compounds (6, 12, 37, 67, 70, 72, 80, 82) onto the base plate (1) or between the two patterned pressing surfaces (8, 28, 48, 58) arranged opposite one another, wherein the at least one filling means (3) is preferably suitable and provided for filling the PMMA-based compounds (6, 12, 37, 67, 70, 72, 80, 82) within the circumferential boundary (2).

## Revendications

1. Procédé de fabrication d'un corps en matière plastique avec des couches structurées pour la fabrication de prothèses dentaires, le procédé présentant les étapes suivantes :
A) préparation d'une première pâte à base de PMMA (6, 37, 67, 70, 80) et d'une deuxième pâte à base de PMMA (12, 37, 67, 72, 82), où la première pâte à base de PMMA n'est pas durcie et présente une première coloration et où la deuxième pâte à base de PMMA n'est pas durcie et présente une deuxième coloration, où la deuxième coloration de la deuxième pâte à base de PMMA se différentie de la première coloration de la première pâte à base de PMMA ;
B) chauffage d'une première surface de pressage structurée (8, 28, 48, 58) à une température entre 90 °C et 150 °C ;
C) pressage de la première pâte à base de PMMA à l'aide de la première surface de pressage structurée chauffée, une surface structurée (10, 38, 68) de la première pâte à base de PMMA étant ainsi créée ;
D) retrait ultérieur de la première pâte à base de PMMA structurée de la première surface de pressage, la surface structurée de la première pâte à base de PMMA restant conservée ; et
E) chauffage de la première surface de pressage structurée à une température entre 90 °C et 150 °C ou chauffage d'une deuxième surface de pressage structurée (8, 28, 48, 58) à une température entre 90 °C et 150 °C ;
F) pressage de la deuxième pâte à base de PMMA à l'aide de la première surface de pressage structurée chauffée ou de la deuxième surface de pressage structurée chauffée, où une surface structurée (14, 38, 68) de la deuxième pâte à base de PMMA est ainsi créée ;
G) retrait ultérieur de la première surface de pressage ou de la deuxième surface de pressage de la deuxième pâte à base de PMMA structurée, la surface structurée de la deuxième pâte à base de PMMA restant conservée ;
H) superposition ultérieure de la deuxième pâte à base de PMMA structurée avec la première pâte à base de PMMA structurée de sorte que la surface structurée de la deuxième pâte à base de PMMA soit orientée en direction de la surface structurée de la première pâte à base de PMMA ; et
I) pressage ultérieur de la première pâte à base de PMMA structurée avec la deuxième pâte à base de PMMA structurée de sorte qu'une liaison solide se produise entre la première pâte à base de PMMA et la deuxième pâte à base de PMMA.

2. Procédé selon la revendication 1, **caractérisé par**
l'étape J) de durcissement de la première pâte à base de PMMA structurée avec la deuxième pâte à base de PMMA pressée avec elle, de préférence, l'étape J) ayant lieu après l'étape I).

3. Procédé selon l'une des revendications précédentes, **caractérisé en ce qu'**un pressage d'une troisième pâte à base de PMMA non durcie a lieu avec deux surfaces de pressage structurées chauffées disposées en face l'une de l'autre, où une surface structurée est ainsi créée sur les deux côtés de la troisième pâte à base de PMMA, où la troisième pâte à base de PMMA présente une troisième coloration qui se différentie de la première coloration de la première pâte à base de PMMA et de la deuxième coloration de la deuxième pâte à base de PMMA,
retrait ultérieur des surfaces de pressage de la troisième pâte à base de PMMA structurée des deux côtés, les deux surfaces structurées de la troisième pâte à base de PMMA restant conservées, où
dans l'étape H), la troisième pâte à base de PMMA structurée est disposée entre la deuxième pâte à base de PMMA structurée et la première pâte à base de PMMA structurée de sorte que les surfaces structurées se touchent, et où, dans l'étape I), le pressage ultérieur de la première pâte à base de PMMA structurée avec la deuxième pâte à base de PMMA structurée et avec la troisième pâte à base de PMMA structurée disposée entre elles a lieu de sorte qu'une liaison solide se produise entre la première pâte à base de PMMA, la deuxième pâte à base de PMMA et la troisième pâte à base de PMMA.

4. Procédé selon la revendication 1 ou la revendication 2, **caractérisé en ce que**
dans l'étape H), au total plusieurs pâtes à base de PMMA supplémentaires sont disposées entre la première pâte à base de PMMA structurée et la deuxième pâte à base de PMMA structurée, où, de préférence, les colorations de pâtes à base de PMMA voisines des première, deuxième et multiples pâtes à base de PMMA sont différentes les unes des autres, où
avant l'étape H), chacune des multiples pâtes à base de PMMA supplémentaires est structurée avec deux surfaces de pressage structurées chauffées disposées en face l'une de l'autre, où une surface structurée est ainsi créée sur les deux côtés des multiples pâtes à base de PMMA supplémentaires, et ensuite un retrait des surfaces de pressage des multiples pâtes à base de PMMA supplémentaires structurées des deux côtés a lieu, où les deux surfaces structurées des multiples pâtes à base de PMMA supplémentaires restent conservées,
dans l'étape I), le pressage ultérieur de la première pâte à base de PMMA structurée avec la deuxième pâte à base de PMMA structurée et avec les multiples pâtes à base de PMMA supplémentaires structurées disposées entre elles a lieu de sorte qu'une liaison solide entre la première pâte à base de PMMA, la deuxième pâte à base de PMMA et les multiples pâtes à base de PMMA supplémentaires structurées disposées entre elles se produise.

5. Procédé selon l'une des revendications précédentes, **caractérisé en ce que** le pressage de la première pâte à base de PMMA dans l'étape C) avec la première surface de pressage structurée chauffée et le pressage de la deuxième pâte à base de PMMA dans l'étape F) avec la première surface de pressage structurée ou avec la deuxième surface de pressage structurée chauffée ont lieu avec une pression entre 10 kN/m² et 500 kN/m², ont lieu de préférence avec une pression entre 10 kN/m² et 100 kN/m², ont lieu de manière particulièrement préférée avec une pression entre 10 kN/m² et 50 kN/m².

6. Procédé selon la revendication 3 ou la revendication 4, **caractérisé en ce que**
le pressage de la troisième pâte à base de PMMA ou des pâtes à base de PMMA supplémentaires a lieu avec les deux surfaces de pressage structurées chauffées disposées l'une en face de l'autre avec une pression entre 10 kN/m² et 500 kN/m², a lieu de préférence avec une pression entre 10 kN/m² et 100 kN/m², a lieu de manière particulièrement préférée avec une pression entre 10 kN/m² et 50 kN/m².

7. Procédé selon l'une des revendications précédentes, **caractérisé en ce que**
le pressage de la première pâte à base de PMMA dans l'étape C) avec la première surface de pressage structurée chauffée et le pressage de la deuxième pâte à base de PMMA dans l'étape G) avec la première surface de pressage structurée chauffée ou avec la deuxième surface de pressage structurée chauffée ont lieu pendant un intervalle de temps entre 1 s et 50 s, ont lieu de préférence pendant un intervalle de temps entre 5 s et 30 s, où, de préférence et dans la mesure où elles sont présentes, le pressage de la troisième pâte à base de PMMA ou des multiples pâtes à base de PMMA supplémentaires a lieu avec les deux surfaces de pressage structurées chauffées disposées l'une en face de l'autre pendant un intervalle de temps entre 1 s et 50 s, a lieu de préférence pendant un intervalle de temps entre 5 s et 30 s.

8. Procédé selon l'une des revendications précédentes, **caractérisé en ce que**
la première surface de pressage structurée et/ou la deuxième surface de pressage structurée est chauffée ou sont chauffées, de préférence, toutes les surfaces de pressage structurées employées sont chauffées pendant le pressage.

9. Procédé selon l'une des revendications précédentes, **caractérisé en ce que**
la première surface de pressage structurée et/ou la deuxième surface de pressage structurée, de préférence, toutes les surfaces de pressage structurées employées présentent des structures avec une hauteur de profil entre 1 mm et 5 mm, de préférence avec une hauteur de profil entre 2 mm et 3 mm.

10. Procédé selon l'une des revendications précédentes, **caractérisé en ce que**
l'on emploie une pression entre 10 kN/m² et 500 kN/m², de préférence on emploie une pression entre 10 kN/m² et 50 kN/m² pour le pressage dans l'étape I).

11. Procédé selon l'une des revendications précédentes, **caractérisé en ce que**
la première surface de pressage structurée et/ou la deuxième surface de pressage structurée, de préférence, toutes les surfaces de pressage structurées employées présentent une structure alvéolaire ou une multiplicité de pointes faisant saillie hors de la surface de pressage ou une multiplicité de protubérances coniques ou en forme de pyramide faisant saillie hors de la surface de pressage, où, de préférence, les pointes faisant saillie ou les protubérances coniques ou en forme de pyramides faisant saillie sont disposées périodiquement dans la surface de pressage.

12. Procédé selon l'une des revendications précédentes, **caractérisé en ce que**
la première surface de pressage structurée et/ou la deuxième surface de pressage structurée, de préférence, toutes les surfaces de pressage structurées employées sont constituées de silicone ou sont revêtues de silicone, ou sont constituées d'un métal, en particulier d'un acier inoxydable, où le métal est de préférence muni d'un revêtement, de manière particulièrement préférée, est revêtu de téflon ou de silicone.

13. Procédé selon l'une des revendications précédentes, **caractérisé en ce que**
les pâtes à base de PMMA, au moment de leur utilisation et à une température de 20 °C, présentent une viscosité entre 1 Pa s et 1000 Pa s.

14. Procédé de fabrication de prothèses dentaires, le procédé comprenant un procédé selon l'une des revendications précédentes et le procédé étant en outre **caractérisé par** l'étape suivante :
K) élaboration d'une prothèse dentaire ou de plusieurs prothèses dentaires individuelles à partir du corps en matière plastique totalement durci selon les étapes de procédé A) à I) et éventuellement J), où un axe de dent de la prothèse dentaire, ou des axes de dents des multiples prothèses dentaires individuelles, s'étend ou s'étendent à partir d'une extrémité basale de la prothèse dentaire ou des prothèses dentaires, où la prothèse dentaire ou les prothèses dentaires sont élaborées par soustraction à partir du corps en matière plastique que l'axe de dent, ou les axes des dents s'étende ou s'étendent à travers plusieurs couches de pâtes à base de PMMA du corps en matière plastique et où l'élaboration a lieu à l'aide d'un procédé CAM par soustraction.

15. Dispositif de mise en oeuvre d'un procédé selon l'une des revendications précédentes, le dispositif présentant
au moins une surface de pressage structurée (8, 28, 48, 58) et une plaque de base (1), où l'au moins une surface de pressage structurée (8, 28, 48, 58) peut être chauffée, et/ou
au moins deux surfaces de pressage structurées (8, 28, 48, 58) disposées l'une face à l'autre,
au moins deux récipients (5) contenant au moins deux pâtes à base de PMMA (6, 12, 37, 67, 70, 72, 80, 82) fluides colorées différemment ou au moins deux récipients (5) contenant les composants de départ pour la fabrication d'au moins deux pâtes à base de PMMA (6, 12, 37, 67, 70, 72, 80, 82) fluides colorées différemment, et
une presse (16) pour presser ensemble au moins deux pâtes à base de PMMA (6, 12, 37, 67, 70, 72, 80, 82) structurées empilées l'une sur l'autre.

16. Dispositif selon la revendication 15, **caractérisé en ce que**
le dispositif présentent une paroi de délimitation périphérique (2) qui est disposée sur la plaque de base (1) et dans laquelle l'au moins une surface de pressage structurée (8, 28, 48, 58) est mobile ou qui est disposée autour des au moins deux surfaces de pressage structurées (8, 28, 48, 58) disposées l'une face à l'autre.

17. Dispositif selon la revendication 15 ou la revendication 16, **caractérisé en ce que**
le dispositif présente en outre au moins un dispositif de remplissage (3) pour l'application des pâtes à base de PMMA (6, 12, 37, 67, 70, 72, 80, 82) fluides sur la plaque de base (1) ou entre les deux surfaces de pressage structurées (8, 28, 48, 58) disposées l'une face à l'autre, où, de préférence, l'au moins un dispositif de remplissage (3) est approprié et prévu pour le remplissage des pâtes à base de PMMA (6, 12, 37, 67, 70, 72, 80, 82) à l'intérieur d'une délimitation périphérique (2).
